# EUROPÄISCHE PATENTSCHRIFT

(11) **EP 0 676 680 B1**
(45) Veröffentlichungstag und Bekanntmachung des Hinweises auf die Patenterteilung: **20.01.1999**
(21) Anmeldenummer: 95104936.0
(22) Anmeldetag: 03.04.1995
(51) Int. Cl.: G05D 7/01, F16K 31/00, G05D 23/13, F23N 1/00, F23N 5/02

(54) **Ventilanordnung**
Valve arrangement
Agencement de soupape

(30) Priorität: 08.04.1994 DE 4412459; 08.04.1994 DE 4412461; 08.04.1994 DE 4412460; 15.07.1994 DE 4426652
(43) Veröffentlichungstag der Anmeldung: 11.10.1995
(73) Patentinhaber: LuK Fahrzeug-Hydraulik GmbH & Co. KG, 61352 Bad Homburg (DE)
(72) Erfinder: Körtge, Randolf, Dipl. Ing., D-61250 Usingen (DE); Lauth, Hans-Jürgen, D-61250 Usingen (DE); Nguyen, Van Doan, D-60437 Frankfurt (DE); Overdiek, Gerd, Dr., Dipl. Ing., D-61381 Friedrichsdorf (DE); Gong, Yuejin, Dipl. Ing., D-61350 Bad Homburg (DE)
(74) Vertreter: Gleiss, Alf-Olav, Dr.jur. Dipl.-Ing.

(56) Entgegenhaltungen:
- US-A- 3 724 494
- US-A- 4 047 846
- US-A- 4 252 141
- US-A- 4 502 501
- US-A- 4 783 043

## Beschreibung

Die Erfindung betrifft eine Ventilanordnung mit einem Stromregelventil, das einen gegen die Kraft einer Feder in einem axialen Innenraum verschiebbar geführten Ventilkolben und eine einen Förderstrom zu einem hydraulischen Verbraucher beeinflussende Förderstromdrossel aufweist.

Aus dem US-Patent 3,724,494 ist eine Ventilanordnung der gattungsgemäßen Art bekannt, die zur Regelung sehr geringer Gas- beziehungsweise Flüssigkeitsmengen dient. Das dort beschriebene Stromregelventil weist zwei in Reihe geschaltete Drosseleinrichtungen auf. Ein Drosselkolben wird zur Erzielung eines gewünschten Volumenstromes über eine Schaltstange von außen voreingestellt. Ein Steuerkolben entscheidet durch seine Position relativ zu einer Kontrollbohrung darüber, welcher Anteil dieses Volumenstroms zum Auslaß des Ventils passieren kann. Bei einem Totalverschluß der Kontrollbohrung durch den Steuerkolben, beispielsweise infolge eines hohen Anschlußdruckes, ist kein Durchfluß mehr möglich.

Weiterhin bekannt ist aus der US-Patentschrift 4,783,043 ein Dämpfungsventil, das zwei parallele, unabhängige Strömungswege aufweist, wobei ein erster ringförmiger Strömungsweg durch einen Kolben im Querschnitt verengbar ist. Wird dieser Strömungsweg durch den Kolben verschlossen, infolge eines durch eine Drosselöffnung auf den Kolbenboden wirkenden hohen Anschlußdruckes, durchströmt das Medium einen zweiten Strömungsweg. Das dort angesprochene Dämpfungsventil wird Verbrauchern wie hydraulisch betätigten Türen vorgeschaltet, die zunächst den überwiegenden Teil einer gewünschten Bewegung schnell ausführen und anschließend eine kleine Restbewegung langsam ausführen. Der für die schnelle Bewegung erforderliche hohe Volumenstrom durchströmt beide Strömungswege. Über den Strömungsquerschnitt der Drosselöffnung ist ein Volumenstrom eingestellt, der zur Verschiebung des Kolbens bis hin zum Verschluß des ersten Strömungsweges dient. Nach dem Verschluß verbleibt nurmehr der enge zweite Strömungsweg, der zur Ausführung der langsameren Restbewegung ausreicht. Das Dokument beschreibt ein Zeitglied, bei dem über den Querschnitt der Drosselöffnung die Zeitspanne voreingestellt werden kann, die nach Beaufschlagung des Ventils vergeht, bis ein durch den Ringspalt strömender Hauptvolumenstrom unterbrochen wird, um danach nur noch den weitaus geringeren Volumenstrom durch den zweiten Strömungsweg passieren zu lassen.

Werden Stromregelventile enthaltende Ventilanordnungen beispielsweise in Lenkhilfpumpen für Kraftfahrzeuge eingesetzt, sorgt die Ventilanordnung dafür, daß ein an der Lenkhilfpumpe angeschlossener Verbraucher mit einem gleichmäßigen Ölstrom beaufschlagt wird. Dieser Ölstrom muß unabhängig von der Drehzahl der Lenkhilfpumpe und damit der Förderleistung der Lenkhilfpumpe zur Verfügung stehen. Bei den bekannten Stromregelventilen ist nachteilig, daß durch die wegabhängige Regelung eine Absenkung der Förderstromkennlinie, das heißt, der Durchflußmenge von der Pumpendrehzahl bei niedrigen Systemdrücken, ausreichend erfolgen kann, während bei hohen Systemdrücken die Förderstromkennlinie nicht ausreichend abgesenkt werden kann.

Es ist daher Aufgabe der Erfindung eine Ventilanordnung der gattungsgemäßen Art zu schaffen, bei der in einfacher Weise eine Förderstromregelung durchgeführt werden kann, die auch bei hohen Systemdrücken eine ausreichende Absenkung der Förderstromkennlinie ermöglicht.

Diese Aufgabe wird bei der Ventilanordnung der eingangs genannten Art mit Hilfe der in Anspruch 1 genannten Merkmale gelöst. Dadurch, daß die Förderstromdrossel von parallel und unabhängig voneinander wirkenden Teilförderstromdrosseln gebildet wird, die jeweils eine veränderbare Meßblende aufweisen, wobei vorzugsweise eine erste Teilförderstromdrossel wegabhängig und ein zweite Teilförderstromdrossel staudruckabhängig arbeitet, ist es vorteilhaft möglich, durch die Kombination der zwei parallel und unabhängig voneinander wirkenden Teilförderstromdrosseln die Förderstromkennlinien bei unterschiedlich hohen Systemdrücken in engen Förderstromkennlinien-Toleranzen zu halten. Durch die vollkommen getrennte Wirkung der beiden Teilförderstromdrosseln können diese sich nicht gegenseitig beeinflussen, so daß die von den Teilförderstromdrosseln gebildete Gesamt-Förderstromdrossel bei hohen Pumpenvolumenströmen und unterschiedlichen Systemdrücken ein stabiles System bildet, bei dem eine gegenseitige Beeinflussung der Teilförderstromkennlinien der Teilförderstromdrosseln ausgeschlossen ist. Es ist insbesondere möglich, eine voneinander unabhängig wirkende, kombinierte wege- und strömungskraftabhängige Regelung des Förderstroms zu ermöglichen. Hierdurch läßt sich die Förderstromkennlinie für hohe und niedrige Systemdrücke bei hohen Pumpenvolumenströmen unabhängig voneinander einstellen, so daß das bisherige Regelverhalten bei niederen Systemdrücken beibehalten werden kann und das Regelverhalten bei hohen Systemdrücken so eingestellt werden kann, daß die Förderstromkennlinie in ausreichendem Maße abgesenkt werden kann.

Dadurch, daß die veränderbaren Meßblenden zueinander parallel angeordnet sind und jeweils eine TeilFörderstromdrossel der Haupt-Förderstromdrossel bilden, wird deren voneinander unabhängige Verstellmöglichkeit so ausgenutzt, daß durch Verstellung wenigstens einer oder beider Meßblenden der Förderstrom in beliebigen Varianten abgeregelt werden kann. Durch Auswahl und/oder Einstellung der Meßblenden kann eine Förderstromkennlinie der Ventilanordnung erzeugt werden, die bei jedem zu erwartenden Systemdruck eine unverzügliche und ausreichend große Absenkung des Förderstroms gewährleistet.

In vorteilhafter Ausgestaltung der Erfindung ist eine Ventilanordnung vorgesehen, die sich dadurch auszeichnet, daß die zweite, staudruckabhängig arbeitende Förderstromdrossel mit einer von einer Zunahme des Förderstroms abhängigen Druckdifferenz zwischen einem Arbeitsdruck der hydraulischen Fördereinrichtung und einem sich auf den Ventilkolben einstellenden Druck beaufschlagbar ist. Hierdurch findet vorteilhaft eine Entkopplung der Steuersignale der beiden Teilförderstromdrosseln statt, so daß die in jedem Betriebszustand der hydraulischen Fördereinrichtung unabhängige Wirkung der beiden Teilförderstromdrosseln gewährleistet ist. Die staudruckabhängige Teilförderstromdrossel wird somit mit einer Druckdifferenz angesteuert, die sich aus dem Arbeitsdruck der hydraulischen Fördereinrichtung und den auf den Ventilkolben der Ventilanordnung wirkenden Druck ergibt, während die wegabhängige Teilförderstromdrossel mit einer Druckdifferenz angesteuert wird, die sich aus einem an dem hydraulischen Verbraucher einstellenden Druck und dem auf den Ventilkolben wirkenden Druck ergibt. Die zwei getrennten Teilförderstromdrosseln regeln den durch sie hindurchtretenden Teilförderstom somit mit verschiedenen Drucksignalen, die keine unmittelbare Abhängigkeit voneinander besitzen.

Sehr vorteilhaft wird hier die Druckdifferenz zwischen der Druckniere der hydraulischen Fördereinrichtung und dem Druck vor dem Hauptkolben der Ventilanordnung zur Beeinflussung des Förderstroms zu einem hydraulischen Verbraucher genutzt.

Ferner ist eine Ventilanordnung vorteilhaft, die sich dadurch auszeichnet, daß die hydraulische Fördereinrichtung über zwei parallel angeordnete Kanäle mit der Ventilanordnung verbunden ist, wobei ein erster Kanal mit einem Druckraum in Verbindung steht, von welchem der Ventilkolben und ein die zweite Förderstromdrossel ergebender Ringkolben mit einem Druck beaufschlagbar sind, und ein zweiter Kanal mit einem Druckraum in Verbindung steht, welcher den Ringkolben mit dem Arbeitsdruck der hydraulischen Fördereinrichtung beaufschlagt. Über diese zwei voneinander getrennten Kanäle kann die Entkopplung der die zwei Teilförderstromdrosseln beaufschlagenden Drucksignale in einfacher Weise erreicht werden.

In bevorzugter Ausgestaltung der Erfindung ist vorgesehen, daß die erste Teilförderstromdrossel von einer axialen Verlängerung des Ventilkolbens und einer feststehenden Meßblende (Stirnwand) gebildet wird, wobei die Verlängerung die Meßblende durchgreift und vorzugsweise eine konische Erweiterung und/oder eine konische Verengung aufweist. Hierdurch wird es möglich, neben der staudruckabhängigen Steuerung eine Feineinstellung der Gesamtförderstromdrossel durch die unterschiedliche Ausgestaltung der wegabhängigen Steuerung in einfacher Weise zu erreichen.

In weiterer bevorzugter Ausgestaltung der Erfindung ist vorgesehen, daß die erste Meßblende (Stirnwand) unabhängig von einer Bewegung der axialen Verlängerung des Ventilkolbens bewegbar ist, insbesondere von einem axial gegen die Kraft einer Feder verschiebbar geführten Drosselkolben gebildet wird. Hierdurch ist vorteilhaft möglich, eine kombinierte wege- und strömungskraftabhängige Regelung des Förderstroms zu ermöglichen, da die erste Meßblende somit doppelhubig verstellbar ist. Für die Verstellung des Drosselkolbens wird sehr vorteilhaft der Druckanstieg aus den Strömungskräften des zu fördernden Mediums ausgenutzt.

In bevorzugter Ausgestaltung der Erfindung ist weiterhin vorgesehen, daß der axial gegen die Kraft einer Feder verschiebbar geführte Drossel kolben gleichzeitig die zweite Meßblende verstellt. Diese wird vorteilhaft von zusätzlichen, parallel zur ersten Meßblende angeordneten Bypass-Öffnungen in einer Führungshülse für den Drosselkolben gebildet, die vorteilhafterweise verschieden geformte Querschnitte aufweisen können. Hierdurch wird erreicht, daß eine wegabhängige Regelung mit einer strömungskraftabhängigen Regelung kombiniert werden kann, da der Kolben mit zunehmendem Systemdruck einer ebenfalls zunehmenden Strömungskraft ausgesetzt ist. Diese Strömungskraft bewirkt eine zusätzliche Druckdifferenz am Ventilkolben, die auch auf den Drosselkolben wirksam wird, und bewegt den die erste Meßblende bildende Drossel kolben entgegen der Federkraft, so daß bei hohen Systemdrücken und hohen Pumpenvolumenströmen eine effizientere Abregelung des Förderstroms erfolgen kann.

Ferner ist eine Ventilanordnung bevorzugt, bei der der Drosselkolben einen Dämpfungsraum ausbildet, der über wenigstens eine Durchgangsöffnung mit einem mit der Druckseite einer hydraulischen Fördereinrichtung verbundenen Druckraum der Ventilanordnung in Verbindung steht. Hierdurch ist es vorteilhaft möglich, über den Dämpfungsraum eine Bewegung des Drosselkolbens während eines abwechselnden Auf- und Zufahrens wenigstens einer Meßlende zu beeinflussen. Da der Dämpfungsraum während einer Bewegung des Drosselkolbens sein Volumen ändert, strömt über den Druckraum der Ventilanordnung entweder ein Fluid in den Dämpfungsraum nach oder bei einer Verkleinerung des Volumens des Dämpfungsraums wird das sich in dem Dämpfungsraum befindende Fluid in den Druckraum zurückgeführt. Hierdurch entsteht an der Durchgangsöffnung ein Druckauf- oder Druckabbau, der als Kraftauf- oder Kraftabbau auf den Drossel kolben, das heißt auf die mit dem Fluid in dem Dämpfungsraum beaufschlagbare Fläche des Drossel kolbens wirkt und einer Flatterbewegung des Drossel kolbens entgegenwirkt und damit die Bewegung des Drosselkolbens abbremst und dämpft. Ein Auftreten von sprunghaften Änderungen in den Förderstromkennlinien des durch den Drossel kolben abgeregelten Förderstroms wird somit weitestgehend vermieden.

In bevorzugter Ausgestaltung der Erfindung ist vorgesehen, daß die Durchgangsöffnung, die den Dämpfungsraum mit dem Druckraum der Ventilanordnung verbindet, in einem frei wählbaren Winkel in bezug auf eine Mittellinie der Ventilanordnung angeordnet ist. Hierdurch wird es möglich, über die Wahl des Winkels zu bestimmen, ob zusätzliche Druckanteile des abzuregelnden, von der hydraulischen Fördereinrichtung bereitgestellten Volumenstroms zur Verstellung und Dämpfung des Drosselkolbens nur aus Strömungskräften, nur aus einem Staudruck oder aus Mischeffekten aus beiden benutzt werden. Der Winkel, in dem die Durchgangsöffnung angeordnet ist, weist dabei vorzugsweise einen Wert zwischen 0 und 90° auf. Bei einem Winkel von 0° werden die zusätzlichen Druckanteile nur aus Strömungskräften, bei einem Winkel von 90° nur aus dem Staudruck benutzt. Bei entsprechend gewählten Zwischenwerten, zwischen 0 und 90°, werden die Strömungskraftanteile und die Staudruckanteile entsprechend anteilig berücksichtigt. Somit ist eine genaue Abstimmung des Regelverhaltens des Drossel kolbens auf verschiedene Einsatzfälle möglich, bei der entweder der Staudruckanteil oder der Strömungskraftanteil an der Verstellung und Dämpfung des Drosselkolbens erhöht werden soll.

Weitere vorteilhafte Ausgestaltungen der Erfindung ergeben sich aus den übrigen in den Unteransprüchen genannten Merkmalen.

Die Erfindung wird nachfolgend in Ausführungsbeispielen anhand der zugehörigen Zeichnungen näher erläutert. Es zeigen:
- Figur 1: einen Längsschnitt durch eine Ventilanordnung;
- Figur 2: ein Schaltbild der Ventilanordnung;
- Figur 3: Förderstromkennlinien der erfindungsgemäßen Ventilanordnung;
- Figur 4: eine Detailansicht einer Ausgestaltung einer wegabhängigen Teilförderstromdrossel;
- Figur 5: Förderstromkennlinien der Ventilanordnung gemäß Figur 4;
- Figur 6: eine Detailansicht einer Ausgestaltung einer wegabhängigen Teilförderstromdrossel nach einer weiteren Variante;
- Figur 7: Förderstromkennlinien der Ventilanordnung gemäß Figur 6;
- Figur 8: einen Längsschnitt durch eine Ventilanordnung nach einer weiteren Ausführung;
- Figur 9: ein Detail der Figur 8 in einer vergrößerten Darstellung;
- Figur 10: einen Längsschnitt durch eine Ventilanordnung in einer weiteren Ausführung;
- Figur 11: einen Längsschnitt durch eine Ventilanordnung nach einer weiteren Ausführung;
- Figur 12: ein Strömungskennlinienfeld gemäß der Ventilanordnung nach Figur 11;
- Figur 13: einen Längsschnitt durch eine Ventilanordnung nach einem weiteren Ausführungsbeispiel und
- Figur 14: ein Strömungskennlinienfeld gemäß der Ventilanordnung nach Figur 13.

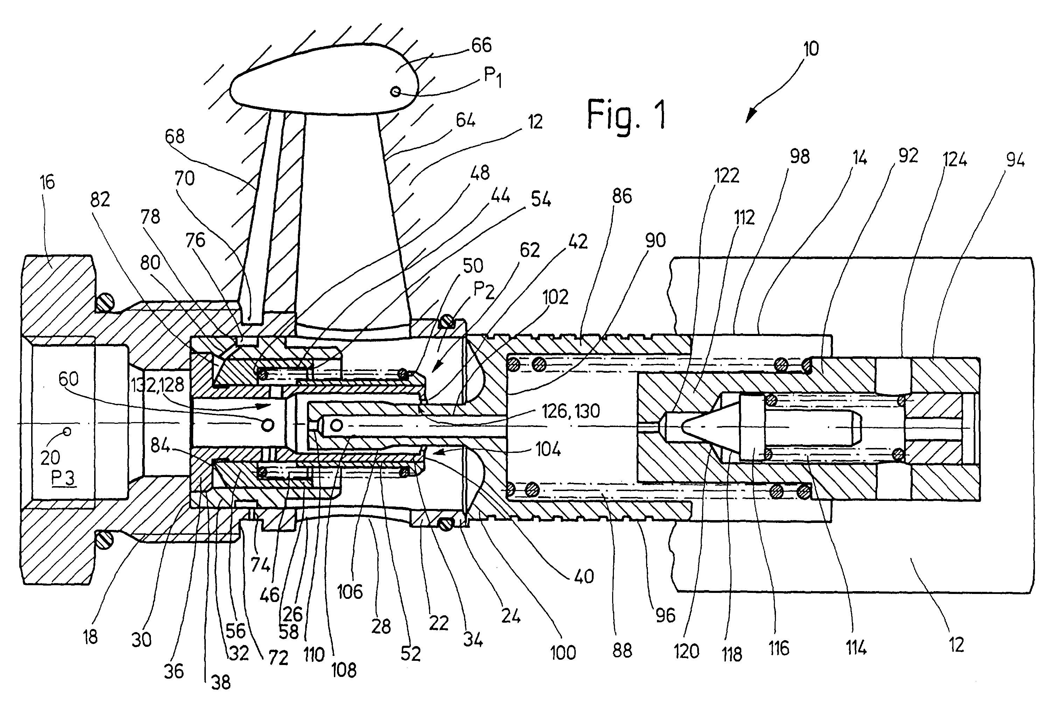

Figur 1 zeigt eine allgemein mit 10 bezeichnete Ventilanordnung, die einen in einem Ventilgehäuse 12 sich axial erstreckenden Innenraum 14 aufweist. Das Ventilgehäuse 12 ist lediglich teilweise angedeutet. An einer Stirnseite des Ventilgehäuses 12 ist der Innenraum 14 durch einen Stopfen 16 verschlossen. Der Stopfen 16 ist auf geeignete Weise in den Innenraum 14 eingebracht, beispielsweise durch ein Gewinde 18. Der Stopfen 16 besitzt eine Durchgangsöffnung 20, an die ein nicht dargestellter hydraulischer Verbraucher, beispielsweise eine Lenkung eines Kraftfahrzeuges, angeschlossen ist. Der Stopfen 16 besitzt eine in den Innenraum 14 hineinragende axiale Verlängerung 22, die einen Endanschlag 24 ausbildet. Die Verlängerung 22 besitzt wenigstens eine Durchgangsöffnung 26, die in einem Ringraum 28 innerhalb des Innenraums 14 mündet. Die Verlängerung 22 bildet eine Ringstufe 30 aus, innerhalb der ein Paßring 32 angeordnet ist. Der Paßring 32 besitzt eine Hülsenform, deren Außendurchmesser dem Innendurchmesser der Ringstufe 30 entspricht. Der Paßring 32 ist in die Ringstufe 30 beispielsweise eingepreßt. Innerhalb des Paßrings 30 ist eine Hülse 34 angeordnet, die sich mit einem Flansch 36 an der Ringstufe 30 der Verlängerung 22 abstützt. Der Paßring 32 besitzt eine Hinterschneidung 38, in der der Flansch 36 arretiert ist. Die Hülse 34 erstreckt sich axial über die Durchgangsöffnung 20 der Verlängerung 22 und besitzt an einer Stirnwand 40 eine Durchgangsöffnung 42.

Zwischen der Hülse 34 und dem Paßring 32 ist ein Ringkolben 44 verschiebbar gegen die Kraft eines elastischen Elementes, beispielsweise einer Feder 46, gelagert. Die Feder 46 stützt sich dabei einerseits an einem Bund 48 des Ringkolbens 44 und andererseits an einem Bund 50 einer auf der Hülse 34 angeordneten weiteren Hülse 52 ab. Die Hülse 52 ist hierbei auf der Hülse 34 beispielsweise durch Aufpressen fest angeordnet. Der Ringkolben 44 besitzt eine Stufenbohrung 54, die zur Ausbildung des Bundes 48 führt. Durch die Stufenbohrung 54 weist der Ringkolben 44 einen Abschnitt 56 auf, mit dem dieser auf der Hülse 34 geführt ist und einen Abschnitt 58 auf, der beabstandet zu der Hülse 34 angeordnet ist und der die Hülse 52 übergreift. Die Hülse 34 besitzt im Bereich des Ringkolbens 44, insbesondere im Bereich dessen Abschnitts 58, über den Umfang der Hülse 34 axial zueinander versetzt angeordnete Durchgangsöffnungen 60. Die Durchgangsöffnungen 60 verbinden die Durchgangsöffnung 20 des Stopfens 16 mit einem innerhalb der Verlängerung 22 ausgebildeten Innenraum 62. Der Innenraum 62 steht über die Durchgangsöffnung 26 mit dem Ringraum 28 in Verbindung.

In dem Ringraum 28 mündet ein erster Kanal 64, der mit der Druckseite 66 einer nicht dargestellten hydraulischen Fördereinrichtung, beispielsweise einer Lenkhilfpumpe, verbunden ist. Die Druckseite 66 ist hier schematisch als Druckniere der hydraulischen Fördereinrichtung angedeutet. Ein zweiter Kanal 68 mündet in einem Ringraum 70, der beispielsweise durch eine Ringnut 72 des Stopfens 16 ausgebildet ist. Der Ringraum 70 steht über wenigstens eine radial verlaufende Durchgangsöffnung 74 mit einem weiteren Ringraum 76 in Verbindung, der von einer Ringnut 78 des Paßrings 32 gebildet wird. Der Ringraum 76 steht über eine Durchgangsöffnung 80 mit einem Druckraum 82 in Verbindung. Der Druckraum 82 wird von dem Flansch 36 der Hülse 34 und einer Stirnfläche 84 des Ringkolbens 44 begrenzt. Die Stirnfläche 84 verläuft hierbei unter einem von einer Radialen abweichenden Winkel. Der Druckraum 82 steht somit über die Durchgangsöffnung 80, den Ringraum 76, die Durchgangsöffnung 74 und den Ringraum 70 mit dem Kanal 68 und damit der Druckseite 66 der hydraulischen Fördereinrichtung in Verbindung.

Nach einem nicht dargestellten Ausführungsbeispiel können der Stopfen 16, der Paßring 32, die Hülse 34 und die Hülse 52 einstückig ausgebildet sein. Dieses gemeinsame Teil ist auf Grund der vorzugsweisen rotationssymmetrischen Ausbildung in relativ einfacher Weise herstellbar. Zur Führung des Ringkolbens 44 ist dann ein entsprechender Schlitz vorgesehen. Die Verbindung des Druckraumes 82 mit dem Kanal 68 erfolgt dann über eine einzige Verbindung, beispielsweise eine Bohrung.

Innerhalb des Innenraums 14 ist ein Ventilkolben 86 gegen die Kraft eines elastischen Elementes, beispielsweise einer Feder 88, axial verschiebbar gelagert. Die Feder 88 stützt sich dabei an einem Grund 90 des Ventilkolbens 86 und an einem Einsatz 92 ab. Der Einsatz 92 ist in eine Stufenbohrung 94 des Ventilgehäuses 12 eingepaßt. Der Ventilkolben 86 ist mit Dichtflächen 96 an der Wandung 98 des Innenraums 14 dichtend geführt. Der Ventilkolben 86 bildet einen ringförmigen Abschluß 100 aus, mit dem dieser durch die Kraft der Feder 88 gegen den Endanschlag 24 des Stopfens 16 gedrückt wird.

Der Ventilkolben 86 besitzt weiterhin eine axiale Verlängerung 102, die die Durchgangsöffnung 42 der Stirnwand 40 der Hülse 34 durchgreift. Ein Durchmesser der Verlängerung 102 ist dabei kleiner gewählt als ein Durchmesser der Durchgangsöffnung 42, so daß ein Ringspalt 104 gebildet wird. Die Verlängerung 102 besitzt weiterhin eine konische Erweiterung 106. Durch die Verlängerung 102 führt eine axiale Bohrung 108, die über eine durchmesserkleinere Blende 110 in der Durchgangsöffnung 20 mündet. Die Bohrung 108 mündet andererseits innerhalb des Ventilkolbens 86 in dem Innenraum 14.

Der Einsatz 92 bildet ein Druckbegrenzungsventil 112 aus, das einen gegen die Kraft eines elastischen Elementes, beispielsweise einer Feder 114, axial verschiebbar geführten Schließkörper 116 aufweist. Der Schließkörper 116 besitzt eine konisch verlaufende Mantelfläche 118, die gegen eine Kante 120 einer Durchgangsöffnung 122 des Einsatzes 92 gedrückt wird. Die Durchgangsöffnung 122 steht mit dem Innenraum 14 innerhalb des Ventilkolbens 86 in Verbindung. Der Einsatz 92 besitzt weiterhin wenigstens eine radiale Durchgangsöffnung 124, die zu einem Bereich niedrigen Drucks, beispielsweise zu einem Tank oder einer Ansaugseite der hydraulischen Fördereinrichtung führt.

Die in Figur 1 gezeigte Ventilanordnung übt folgende Funktion aus.

Die allgemeine Funktionsweise der Ventilanordnung 10 ist an sich bekannt und dient dazu, einem an die Durchgangsöffnung 20 angeschlossenen hydraulischen Verbraucher einen vorgebbaren Förderstrom zuzuordnen und diesen bei sich ändernden, von der hydraulischen Fördereinrichtung bereitgestellten Förderströmen (Volumenströmen) und Systemdrücken auf einen vorgebbaren Wert zu begrenzen.

Über die Druckseite 66 der hydraulischen Fördereinrichtung wird ein Förderstrom bereitgestellt, der über die Kanäle 64 und 68 auf die Ventilanordnung 10 wirkt. An der Druckseite 66 herrscht somit ein Arbeitsdruck p₁ der hydraulischen Fördereinrichtung. Der bereitgestellte Förderstrom gelangt über den Ringraum 28, die Durchgangsöffnung 26 in den Innenraum 62 und von hier einerseits über den Ringspalt 104 und andererseits über die Durchgangsöffnungen 60 in die Durchgangsöffnung 20 zu dem hydraulischen Verbraucher. Der Ringspalt 104 bildet somit eine erste Meßblende 126 und die Durchgangsöffnungen 60 eine zweite Meßblende 128. In dem Innenraum 62 stellt sich ein bestimmter Druck p₂ ein, der auf den Ventilkolben 86 wirkt. Die von dem Ringspalt 104 gebildete Meßblende 102 wirkt mit der konischen Erweiterung 106 der axialen Verlängerung 102 des Ventilkolbens 86 zusammen und bildet eine erste Teilförderstromdrossel 130. Die die zweite Meßblende 128 ergebenden Durchgangsöffnungen 60 wirken mit dem Abschnitt 56 des Ringkolbens 44 zusammen und bilden eine zweite Teilförderstromdrossel 132. Die Teilförderstromdrosseln 130 und 132 lassen jeweils einen Teil des Förderstromes des von der hydraulischen Fördereinrichtung bereitgestellten Gesamtförderstromes durch und bilden gemeinsam eine Gesamtförderstromdrossel der Ventilanordnung 10. In der Durchgangsöffnung 20 stellt sich ein bestimmter Betriebsdruck p₃ ein, der an dem angeschlossenen hydraulischen Verbraucher anliegt.

Der an der Druckseite 66 herrschende Druck p₁ wirkt über die erläuterten Verbindungen ebenfalls in dem Druckraum 82. Während des Betriebes der hydraulischen Fördereinrichtung stellen sich bestimmte Druckverhältnisse zwischen dem Arbeitsdruck p₁, dem Druck p₂ und dem Betriebsdruck p₃ ein, die eine Steuerung der Ventilanordnung 10 bewirken. Der in dem Innenraum 62 wirkende Druck p₂ drückt den Ventilkolben 86 gegen die Feder 88, während der Betriebsdruck p₃ über die Bohrung 108 an der Rückseite des Ventilkolbens 86 wirkt und somit dem Druck p₂ entgegengerichtet ist.

Entsprechend der Druckdifferenz zwischen dem Druck p₂ und dem Betriebsdruck p₃ wird der Ventilkolben 86 gegen die Kraft der Feder 88 verschoben und öffnet hierbei eine, hier nicht weiter zu betrachtende, sogenannte Booster-Verbindung zu einem Raum niederen Drucks. Hierdurch kann das in dem Innenraum 62 sich befindende geförderte Medium über die Booster-Verbindung beispielsweise in den Tank der hydraulischen Fördereinrichtung zurückfließen. Durch das Verschieben des Ventilkolbens 86 wird die axiale Verlängerung 102 in den Ringspalt 104 gezogen, wobei die konische Erweiterung 106 eine Verkleinerung des Ringspaltes 104 bewirkt. Hierdurch erfolgt eine wegabhängige Regelung des durch die Teilförderstromdrossel 130 fließenden Teilförderstroms.

Der an der Druckseite 66 wirkende Arbeitsdruck p₁ beaufschlagt über den Druckraum 82 die Stirnfläche 84 des Ringkolbens 44, während dessen andere Seite mit dem in dem Innenraum 62 herrschenden Druck p₂ beaufschlagt wird. Entsprechend dem sich einstellenden Druckverhältnis von p₁ zu p₂ wird der Ringkolben 44 gegen die Kraft der Feder 46 axial verschoben, so daß sein Abschnitt 56 die Durchgangsöffnungen zumindest zum Teil übergreifen kann. Entsprechend der Verlagerung des Abschnittes 56 des Ringkolbens 44 wird der durch die Teilförderstromdrossel 132 durchgelassene Teilförderstrom zu dem hydraulischen Verbraucher gesteuert. Diese Steuerung erfolgt ausschließlich staudruckabhängig und ist von der Druckdifferenz des Arbeitsdruckes p₁ zu dem Druck p₂ abhängig.

Insgesamt ist somit eine Förderstromdrossel geschaffen, die sich aus den Teilförderstromdrosseln 130 und 132 zusammensetzt, wobei bei Zunahme eines Differenzdruckes p₁ minus p₂ eine staudruckabhängige Reduzierung des über die Teilförderstromdrossel 132 fließenden Teilförderstromes erfolgt, während bei einer Zunahme des Differenzdruckes p₂ minus p₃ eine wegabhängige Reduzierung des über die Teilförderstromdrossel 130 fließenden Teilförderstromes erfolgt. Über die wegabhängige Teilförderstromdrossel 130 ist eine Feineinstellung des Gesamtförderstromes möglich. Die Teilförderstromdrosseln 130 und 132 werden somit von getrennten beziehungsweise entkoppelten Drucksteuersignalen angesteuert.

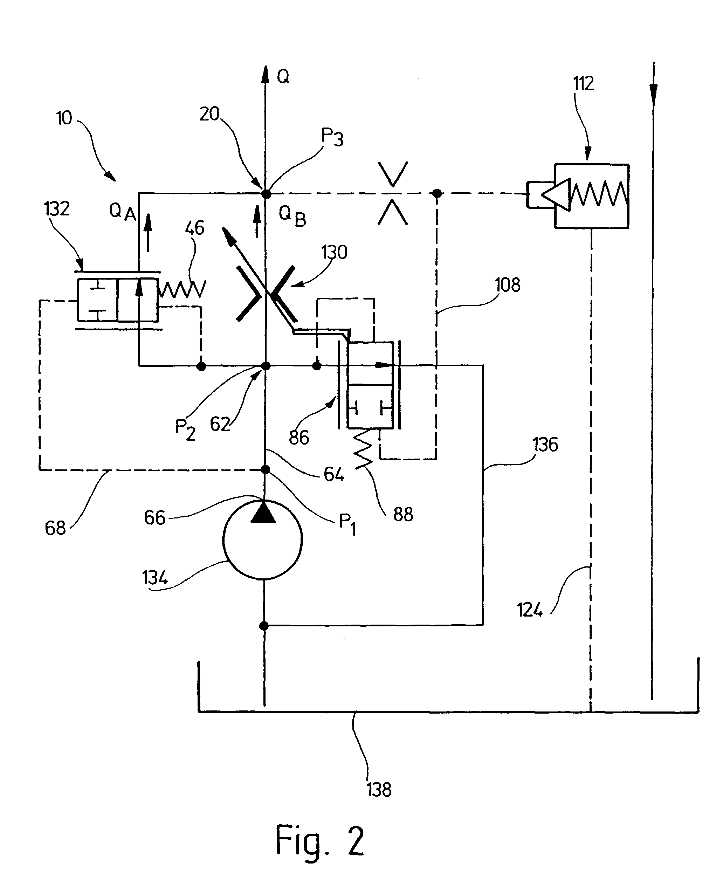

In der Figur 2 ist ein Schaltbild der in Figur 1 gezeigten Ventilanordnung 10 dargestellt. Das Schaltbild soll die Steuerfunktion der Teilförderstromdrosseln 130 und 132 verdeutlichen. Gleiche Teile wie in Figur 1 sind trotz der anderen Darstellung mit gleichen Bezugszeichen versehen, um den Gesamtzusammenhang zu verdeutlichen. Eine hydraulische Fördereinrichtung 134 fördert im Betrieb einen Förderstrom, der abhängig von der Drehzahl der hydraulischen Fördereinrichtung 134 ist. Ist die hydraulische Fördereinrichtung beispielsweise eine in Kraftfahrzeugen angeordnete Lenkhilfpumpe, wird diese beispielsweise von der Brennkraftmaschine des Kraftfahrzeuges mit sich ändernden Drehzahlen angetrieben. Von der Druckseite 66 der hydraulischen Fördereinrichtung 134 gehen die Kanäle 64 und 68 zu der Ventilanordnung 10. Der Kanal 68 führt zu der zweiten Teilförderstromdrossel 132 und ist lediglich als Steuerkanal ausgelegt, während der Kanal 64 zu der ersten Teilförderstromdrossel 130 und der zweiten Teilförderstromdrossel 132 führt. Ein hier dargestellter Kreuzungspunkt bildet den Innenraum 62, an dem der Druck P₂ herrscht, während an der Druckseite 66 der Arbeitsdruck p₁ der hydraulischen Fördereinrichtung 134 herrscht. Durch die Druckdifferenz p₁ minus p₂ wird die Teilförderstromdrossel 132 gesteuert, so daß sich ein Teilförderstrom Q_{A} ergibt.

Über die wegabhängige Teilförderstromdrossel 130 ergibt sich ein Teilförderstrom Q_{B}, der aus der Druckdifferenz zwischen dem Druck p₂ und dem Betriebsdruck p₃ an dem hydraulischen Verbraucher gesteuert wird. Die Teilförderströme Q_{A} und Q_{B} vereinigen sich in der zu dem hydraulischen Verbraucher führenden Leitung beziehungsweise in der Durchgangsöffnung 20 zu dem Gesamtförderstrom Q.

Weiterhin ist der Ventilkolben 86 angedeutet, der einerseits mit dem Druck p₂ und andererseits über die Bohrung 108 mit dem Arbeitsdruck p₃ beaufschlagt ist. Entsprechend der Stellung des Ventilkolbens 86 erfolgt - wie bereits erwähnt - einerseits die wegabhängige Verstellung der ersten Teilförderstromdrossel 130 und die Öffnung einer Booster-Verbindung 136 zu dem Ansaugbereich beziehungsweise einem Tank 138 der hydraulischen Fördereinrichtung 134. Der Arbeitsdruck p₃ wirkt weiterhin auf das Druckbegrenzungsventil 112, das bei Überschreiten eines einstellbaren Mindestdruckes öffnet und über die Durchgangsbohrung 124 eine Verbindung zu dem Tank 138 herstellt.

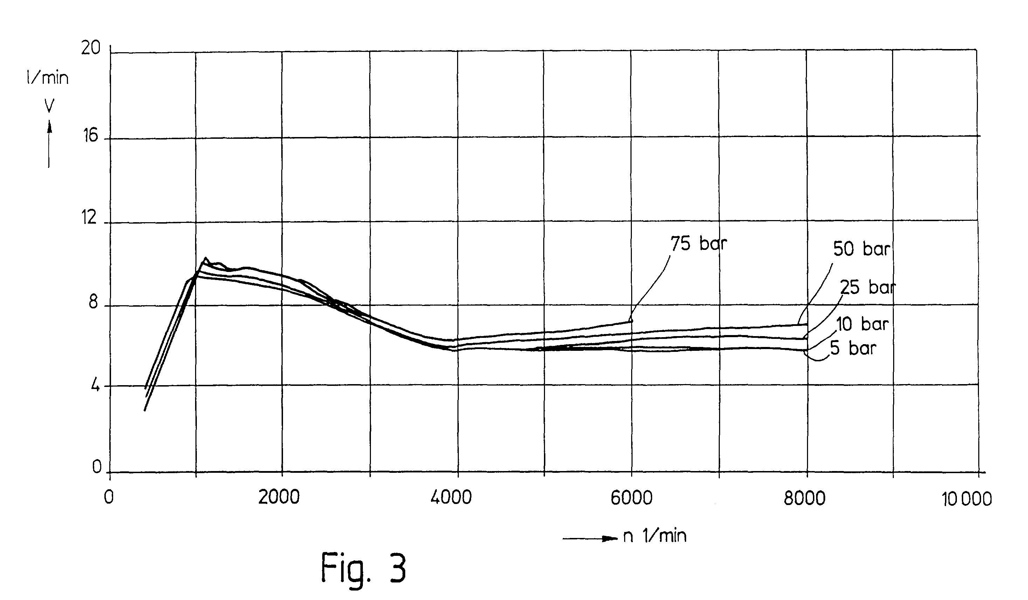

In der Figur 3 sind Förderstromkennlinien der Ventilanordnung 10 dargestellt. Ein von der hydraulischen Fördereinrichtung 134 bereitgestellter Volumenstrom V in Liter pro Minute ist über eine Drehzahl n der hydraulischen Fördereinrichtung 134 pro Minute aufgetragen. Es ist eine Schar von Förderstromkennlinien aufgetragen, die bei einem Druck von 75 bar, 50 bar, 25 bar, 10 bar und 5 bar aufgenommen wurden. Der hier angegebene Druckwert entspricht dem Betriebsdruck p₃ an dem angeschlossenen hydraulischen Verbraucher. Es wird deutlich, daß sich, trotz eines sich extrem unterschiedlich einstellenden Druckes von 5 bis 75 bar, die Kennlinien in einem schmalen Toleranzband bewegen, so daß durch die kombinierte und unabhängig voneinander wirkenden Teilförderstromdrosseln 130 und 132 der Volumenstrom V bei steigenden Drehzahlen n und unterschiedlich hohen Drücken annähernd konstant gehalten werden kann. Das Kennlinienband wird somit schmaler.

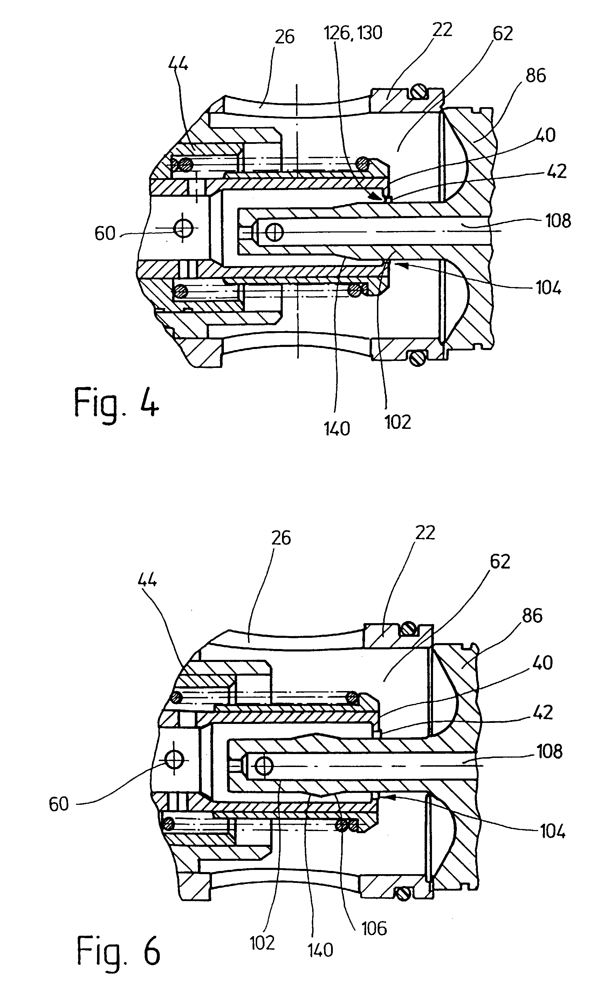

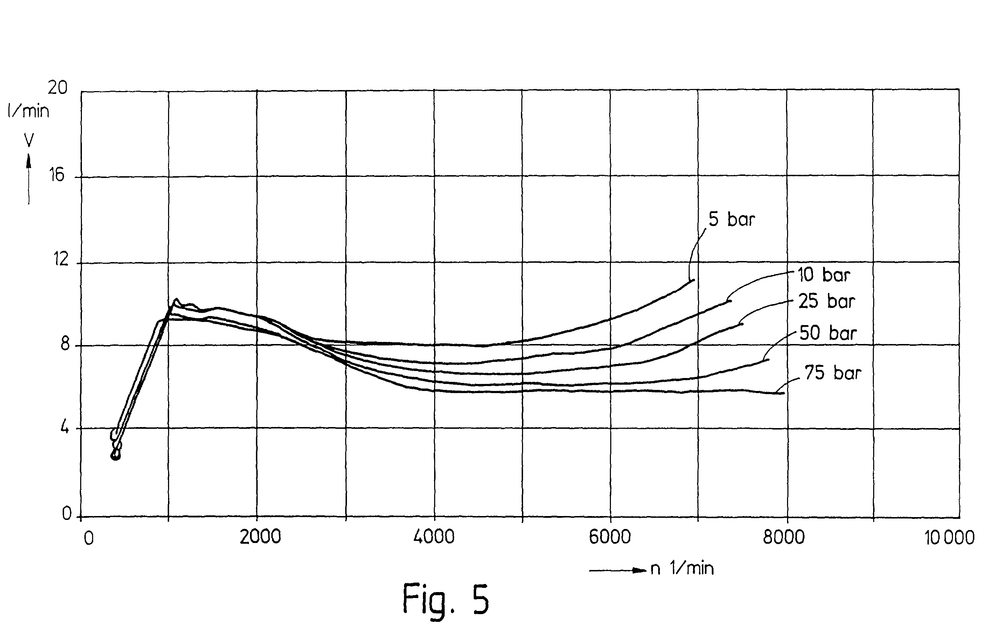

In der Figur 4 ist die wegabhängige Teilförderstromdrossel 130 der Ventilanordnung 10 in einer Ausführungsvariante gezeigt, wobei gleiche Teile wie in Figur 1 mit gleichen Bezugszeichen versehen und nicht nochmals erläutert sind. Die axiale Verlängerung 102 besitzt hier eine konische Verengung 140. Somit wird während einer axialen Verschiebung des Ventilkolbens 86 der Ringspalt 104 und damit die erste Meßblende 126 nicht zu- sondern aufgefahren. Hierdurch lassen sich die in Figur 5 dargestellten Kennlinien erreichen, indem das Kennlinienband nach zunächst erfolgter Abregelung des Volumenstromes wieder breiter wird. Über die Gestaltung der Konizität der Verengung 140 lassen sich beliebige Feineinstellungen der Kennlinien erreichen.

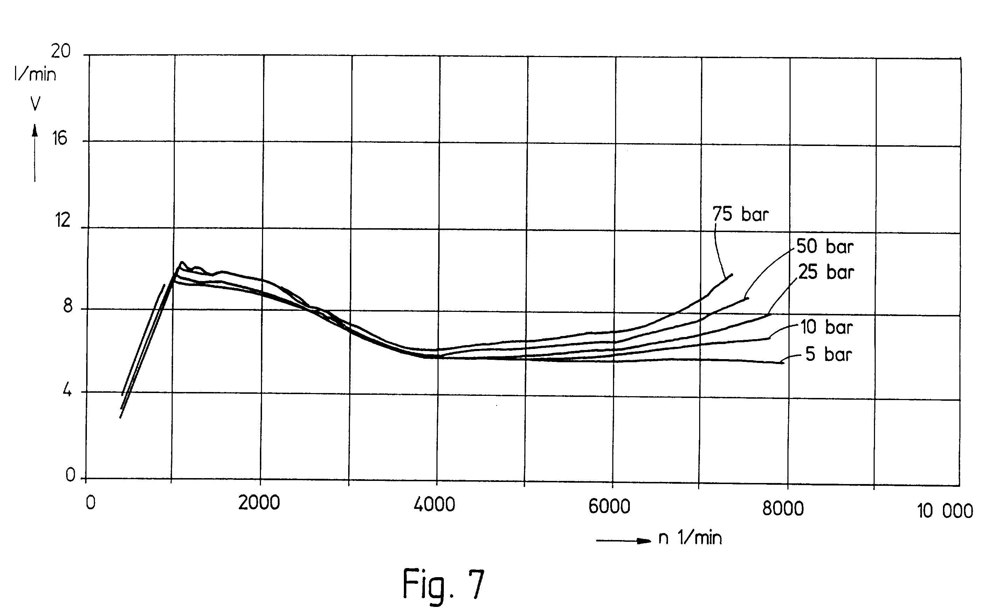

Gemäß Figur 6 kann die Verlängerung 102 in einer weiteren Variante zuerst die konische Erweiterung 106 und dann die konische Verengung 140 aufweisen. Mit einer derartigen Ausgestaltung lassen sich Kennlinien gemäß Figur 7 einstellen, die erst ein schmales Kennlinienband bilden, das bei Übergang der Teilförderstromdrossel 130 in die konische Verengung 140 breiter wird.

Der Anordnung mehrerer sich abwechselnder konischer Erweiterungen, konischer Verengungen und konstanter Bereiche auf der axialen Verlängerung 102 zur Einstellung beliebiger Kennlinien der Ventilanordnung 10 sind außer dem zur Verfügung stehendem Hubweg des Ventilkolbens 86 keine Grenzen gesetzt.

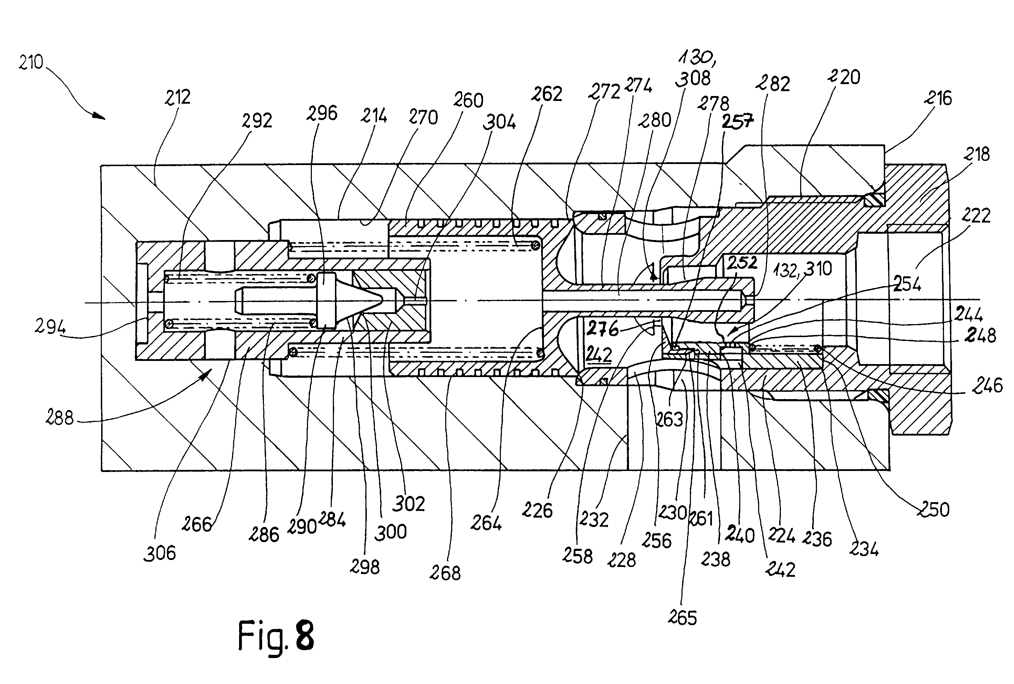

Figur 8 zeigt eine allgemein mit 210 bezeichnete Ventilanordnung, die einen in einem Ventilgehäuse 212 sich axial erstreckenden Innenraum 214 aufweist. An einer Stirnseite 216 des Ventilgehäuses 212 ist der Innenraum 214 durch einen Stopfen 218 verschlossen, der einen Ventilsitz bildet. Der Stopfen 218 ist auf geeignete Weise in den Innenraum 214 eingebracht, beispielsweise durch ein Gewinde 220. Der Stopfen 218 besitzt eine Durchgangsöffnung 222, an die ein nicht dargestellter Verbraucher, beispielsweise eine Lenkung eines Kraftfahrzeuges, angeschlossen ist. Der Stopfen 218 besitzt eine in den Innenraum 214 hineinragende axiale Verlängerung 224, die einen Endanschlag 226 ausbildet. Die Verlängerung 224 besitzt wenigstens eine Durchgangsbohrung 228, die in einen Ringraum 230 mündet. Der Ringraum 230 steht mit einer Bohrung 232 in Verbindung, die zu einer Druckseite einer nicht dargestellten hydraulischen Fördereinrichtung, beispielsweise einer als Flügelzellenpumpe ausgebildeten Lenkhilfpumpe, führt. Die Verlängerung 224 bildet an ihrem Innenumfang eine Ringstufe 234 aus. In diese Ringstufe 234 ist eine Hülse 236 eingepaßt, die eine parallel zur Verlängerung 224 verlaufende axiale Verlängerung 238 aufweist. Die Verlängerung 238 bzw. die Hülse 236 besitzt wenigstens eine Durchgangsöffnung 240, die in einem innerhalb der Verlängerung 224 des Stopfens 220 ausgebildeten Hohlraum 242 mündet. Die Anzahl der Durchgangsöffnungen 240 über den Umfang der Hülse 236 ist frei wählbar. Nach einem nicht dargestellten Ausführungsbeispiel kann die Durchgangsöffnung 240 auch durch eine kreissegmentartig, das heißt schlitzartig verlaufende Öffnung gebildet sein. Der Hohlraum 242 steht über die Durchgangsbohrung 228 mit dem Ringraum 230 in Verbindung. Innerhalb der Hülse 236 ist ein Kolben 244 gegen die Kraft einer Feder 246 axial verschiebbar gelagert. Die Feder 246 stützt sich dabei an einer Stirnfläche 248 des Kolbens 244 einerseits und an einer Stirnfläche 250 der Ringstufe 234 andererseits ab. Der Kolben 244 besitzt wenigstens eine Durchgangsöffnung 252, die jeweils mit den Durchgangsöffnungen 240 der Hülse 236 fluchten. Die Durchgangsöffnungen 240 und 252 bilden eine zweite Meßblende 310. Die Durchgangsöffnung 252 mündet über eine Verengung 254 in der Durchgangsöffnung 222.

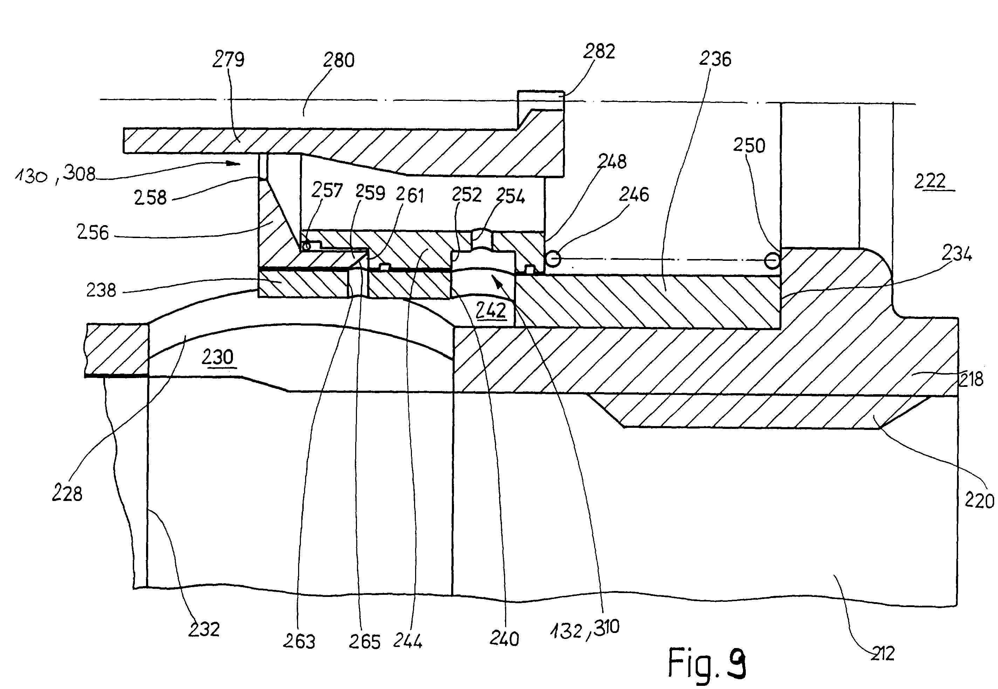

Wie Figur 9 in einer vergrößerten Darstellung verdeutlicht, ist in der Hülse 236 weiterhin eine Stirnwand 256 angeordnet, die einen Endanschlag 259 für den Kolben 244 ausbildet. Der Kolben 244 besitzt hierzu eine Ringstufe 261, die durch die Kraft der Feder 246 gegen den Endanschlag 259 gedrückt wird. Im Bereich der Ringstufe 261 weist die Hülse 236 wenigstens eine Durchgangsöffnung 263 auf, die mit dem Hohlraum 242 und damit dem Druckraum der Ventilanordnung 210 in Verbindung steht. Der Endanschlag 259 der Stirnwand 256 besitzt eine Anschrägung 65. Die Anschrägung 265 gewährleistet ein Freihalten der Fläche der Ringstufe 261 des Drosselkolbens 244 und bildet somit einen pumpendruckbeaufschlagten Raum aus. Die Stirnwand 256 besitzt weiterhin eine Durchgangsöffnung 258, die eine Verbindung zwischen dem Hohlraum 242 und der Durchgangsöffnung 222 herstellt, und die damit eine erste ringförmige Meßblende 308 bildet.

Im Bereich des Stopfens 218 ist in Figur 8 die Darstellung derart unterteilt, daß oberhalb der Mittellinie der Stand der Technik und unterhalb der Mittellinie die Erfindung verdeutlicht ist.

Innerhalb des Innenraums 214 ist ein Ventilkolben 260 gegen die Kraft einer Feder 262 axial verschiebbar gelagert. Die Feder 262 stützt sich dabei an einem Grund 264 des Ventilkolbens 260 und einem Einsatz 266 ab. Der Ventilkolben 260 besitzt Dichtflächen 268, mit denen er an einer Wandung 270 des Innenraums 214 dichtend anliegt. Der Ventilkolben 260 weist einen ringförmigen Abschluß 272 auf, mit dem dieser durch die Kraft der Feder 262 gegen den Endanschlag 26 des Stopfens 218 gedrückt wird. Der Ventilkolben 260 besitzt weiterhin eine axiale Verlängerung 274, die die Durchgangsöffnung 258 der Stirnwand 256 durchgreift und in der Durchgangsöffnung 222 endet. Der Durchmesser der Verlängerung 274 ist dabei kleiner als der Durchmesser der Durchgangsöffnung 258, so daß sich ein Ringspalt 276 ergibt. An ihrem Ende besitzt die Verlängerung 274 eine konische Erweiterung 278. Die Durchgangsöffnung 258 bildet gemeinsam mit der Verlängerung 274 die erste Meßblende 308. Die Verlängerung 274 weist weiterhin eine axiale Bohrung 280 auf, die über eine durchmesserkleinere Blende 282 in der Durchgangsöffnung 222 mündet. Die Bohrung 280 endet andererseits in dem Innenraum 214.

Der Einsatz 266 schließt den Innenraum 214 an der dem Stopfen 218 abgewandten Seite ab und ist beispielsweise eingepreßt oder eingeschraubt. Der Einsatz 266 besitzt eine Hülse 284, die einen Innenraum 286 ausbildet. In dem Innenraum 286 ist ein Druckbegrenzungsventil 288 angeordnet. Das Druckbegrenzungsventil 288 besitzt einen Schließkörper 290, der gegen die Kraft einer Feder 292 axial verschiebbar gelagert ist. Die Feder 292 stützt sich dabei an einem Grund 294 des Einsatzes 266 und einem Bund 296 des Schließkörpers 290 ab. Durch die Feder 292 wird eine konisch verlaufende Mantelfläche 298 des Schließkörpers 290 gegen eine Kante 300 eines Verschlußstopfens 302 gedrückt. Der Verschlußstopfen 302 ist in die Hülse 284 beispielsweise eingepreßt und dichtet den Innenraum 286 gegenüber dem Innenraum 214 ab und bildet einen Ventilsitz für das Druckbegrenzungsventil 288. Der Verschlußstopfen 302 besitzt eine axiale Bohrung 304, die in dem Innenraum 214 mündet. Von dem Innenraum 286 geht eine Bohrung 306 aus, die mit einer nicht dargestellten Bohrung in Verbindung steht, die beispielsweise zu einem Tank oder der Ansaugseite der hydraulischen Fördereinrichtung führt.

Die in der Figur 8 gezeigte Ventilanordnung übt folgende Funktion aus:

Die allgemeine Funktionsweise der Ventilanordnung 210 ist an sich bekannt und dient dazu, einem Verbraucher einen vorgegebenen Förderstrom zuzuordnen und diesen auf einen vorgebbaren Wert zu begrenzen. Ein von der nicht dargestellten hydraulischen Fördereinrichtung ausgehender Volumenstrom wirkt über die Bohrung 232, den Ringraum 230, die Durchgangsbohrung 228 und den Hohlraum 242 auf den Ventilkolben 260. Über den Ringspalt 276 stellt sich gleichzeitig ein bestimmter Förderstrom in der Durchgangsöffnung 222 und damit an einem dort angeschlossenen Verbraucher ein. Dieser Förderstrom wird im wesentlichen durch die freie Durchgangs fläche der Durchgangsöffnung 258 (Teilförderstromdrossel 130) bestimmt. Weiterhin stellt sich ein bestimmter Förderstrom über den Hohlraum 242, die Durchgangsöffnung 240, die Durchgangsöffnung 252 (Teilförderstromdrossel 132) in der Durchgangsöffnung 222 und damit an den dort angeschlossenen Verbraucher ein. Der Ringspalt 276 stellt somit die erste Meßblende 308 und die Durchgangsöffnung 252 die zweite Meßblende 310 der Ventilanordnung 210 (3-Wege-Stromregler) dar, die jeweils einen Teil-Förderstrom durchlassen, der sich in der Durchgangsöffnung 222 zu einem zu dem Verbraucher geführten Gesamt-Förderstrom vereinigt.

In dem Maße, wie der Volumenstrom und ein von diesem bewirkter Differenzdruck über die Meßblenden 308 und 310 ansteigt, wird der Ventilkolben 260 gegen die Kraft der Feder 262 in den Innenraum 214 hineingedrückt. Durch diese axiale Verschiebung des Ventilkolbens 260 wird gleichzeitig die Verlängerung 274 in die Durchgangsöffnung 258 gezogen. Die konische Erweiterung 278 bewirkt dabei eine Verkleinerung der freien Durchgangsfläche der Durchgangsöffnung 258, so daß der Ringspalt 276 sich proportional verkleinert. Hiermit wird erreicht, daß trotz eines erhöhten Volumenstroms ein reduzierter Förderstrom über die Durchgangsöffnung 222 den angeschlossenen Verbraucher erreicht. Da der Gesamt-Förderstrom sich aus den erwähnten Teil-Förderströmen zusammensetzt, wird über den Ringspalt 276, das heißt die Meßblende 308, der entsprechende Teil-Förderstrom reduziert. Die Verstellung der Meßblende 308 wirkt insbesondere bei niederen Systemdrücken.

Steigt der von der hydraulischen Fördereinrichtung ausgehende Volumenstrom, bei einer Lenkhilfpumpe beispielsweise durch eine höhere Drehzahl einer die Lenkhilfpumpe antreibenden Brennkraftmaschine, weiter an, und steigt weiterhin der Verbraucherdruck, beispielsweise durch Betätigen des Lenkrads, an, steigen zusätzliche Druckanteile, die auf Strömungsanteilen beruhen, in der Bohrung 232 auf hohe Werte an. Diese Druckanteile herrschen ebenfalls - wie bereits erwähnt - in dem Hohlraum 242. Dort drücken diese einerseits auf den Ventilkolben 260 und andererseits auf die Ringstufe 261 des Kolbens 244. Übersteigen diese Druckanteile einen bestimmten durch die Federkraft der Feder 246 wählbaren Wert, wird der Kolben 244 gegen die Kraft der Feder 246 axial verschoben. Hierdurch wird die Durchgangsöffnung 252 des Kolbens 244 axial gegenüber der Durchgangsöffnung 240 der Hülse 236 verschoben. Somit verringert sich hier ebenfalls die freie Durchgangs fläche der Durchgangsöffnung 240 bzw. der Durchgangsöffnung 252. Durch diese Verringerung der freien Durchgangs fläche wird trotz der erhöhten zusätzlichen Druckanteile ein reduzierter Förderstrom über die zweite Meßblende 310 der Durchgangsöffnung 222 und damit dem dort angeschlossenen Verbraucher zur Verfügung gestellt.

Durch die Kombination der zwei unabhängig voneinander wirkenden Meßblenden 308 und 310 wird erreicht, daß bei unterschiedlich hohen Systemdrücken und hohen Volumenströmen durch die auf Strömungskraftanteilen beruhenden Druckanteile eine entsprechend angepaßte Herunterregelung des Förderstroms in der Durchgangsöffnung 222 erfolgen kann. Es sind Förderstromkennlinien einstellbar, die auch bei hohen Drücken bzw. Druckanteilen eine Absenkung des Förderstroms auf die gewünschten Werte gewährleisten. Durch Ausgestaltung des Ventilkolbens 260 und des Kolbens 244, insbesondere deren mit dem Druck bzw. den Druckanteilen beaufschlagten Bereiche sowie Einstellung der von den Federn 262 bzw. 246 ausgehenden Federkraft, können die Förderstromkennlinien für niedrige und hohe Systemdrücke unabhängig voneinander eingestellt werden. Über die erste Meßblende 308 erfolgt eine wegabhängige Regelung durch die wegabhängige Verstellung der Meßblende 308. Mit der zweiten Meßblende 310 kann eine strömungskraftabhängige Regelung der Förderstromkennlinie, insbesondere für hohe Systemdrücke bei hohen Volumenströmen erfolgen. Diese Strömungskraftanteile wirken auf den Kolben 244, an dem sich zwischen dem Hohlraum 242 und der Durchgangsöffnung 222 eine Druckdifferenz einstellt. Diese zusätzlichen Druckanteile wirken auf den Kolben 244 und drücken diesen gegen die Feder 246; infolgedessen erfolgt die bereits erwähnte Verstellung der zweiten Meßblende 310.

Der in der Durchgangsöffnung 222 herrschende Druck liegt über der Bohrung 280 der Verlängerung 274 gleichzeitig in dem Innenraum 214 und damit am Druckbegrenzungsventil 288 an. Durch die Ausbildung der Blende 282 wird der auf das Druckbegrenzungsventil 288 und im Innenraum 214 wirkende Druck gegenüber dem Druck im Hohlraum 242 bei Durchfluß durch die Blende 282 reduziert. Wird ein bestimmter maximaler Druck überschritten, wird über die Bohrung 304 der Öldruck auf den Schließkörper 290 so groß, daß dieser gegen die Kraft der Feder 292 axial verschoben wird. Hierdurch ergibt sich, daß das unter Druck stehende Fluid durch die Bohrung 304, den Innenraum 286 und die Bohrung 306 beispielsweise zu der Ansaugseite bzw. einem Tank der nicht dargestellten hydraulischen Fördereinrichtung zurückfließen kann. Durch die Pilotstufenfunktion des Druckbegrenzungsventils 288 wird der eine Hauptstufe bildende Ventilkolben 260 bewegt, der den überschüssigen Volumenstrom, beispielsweise zu der Ansaugseite der nicht dargestellten Fördereinrichtung zurückfließen läßt. Der Druck wird damit auf seinen maximalen Wert begrenzt, und die Fördereinrichtung fördert nunmehr kein Fluid mehr zum Verbraucher.

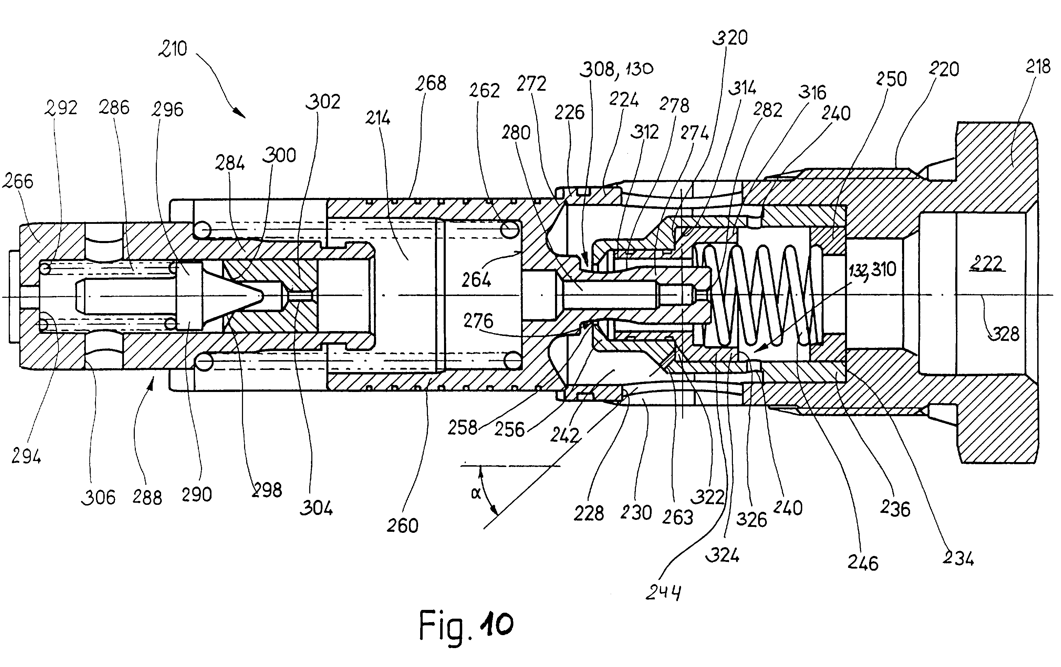

In der Figur 10 ist in einer Schnittdarstellung eine weitere Ausführungsvariante einer Ventilanordnung 210 gezeigt. Gleiche Teile wie in Figur 8 sind mit gleichen Bezugszeichen versehen und hier nicht nochmals erläutert. In der Figur 9 wurde aus Gründen der Übersichtlichkeit auf die Darstellung des Ventilgehäuses 212 verzichtet.

Bei dem hier gezeigten Ausführungsbeispiel bildet die Hülse 236 gleichzeitig die Stirnwand 256 aus, das heißt, Hülse 236 und Stirnwand 256 sind einstückig miteinander verbunden. Innerhalb der Hülse 236 ist der Kolben 244 gegen die Kraft der Feder 246 axial verschiebbar geführt. Der Kolben 244 besitzt einen durchmesserkleineren Bereich 312, der über eine Ringstufe 314 in einen durchmessergrößeren Bereich 316 übergeht. Die Ringstufe 314 bildet einen Anschlag aus, der gegen einen Endanschlag 320 der Hülse 236 führbar ist. Die Ringstufe 314 verläuft konisch, so daß sich ein Hohlraum 322 ergibt, der über die Durchgangsöffnung 263 mit dem Hohlraum 242 in Verbindung steht. Die Durchgangsöffnung 263 ist in einem frei wählbaren Winkel α zu einer Mittellinie 328 der Ventilanordnung 210 angeordnet und bildet eine Dämpfungsdüse. Der durchmessergrößere Bereich 316 bildet einen Ringfortsatz 324 aus, der die Stirnfläche 248 des Kolbens 244 umschließt. Der Ringfortsatz 324 kann dabei eine frei wählbare Länge aufweisen, die so gewählt ist, daß ein Abschluß 326 des Ringfortsatzes 324 zu einer dem Kolben 244 am nächsten liegenden Durchgangsöffnung 240 einen Abstand aufweist. Die Hülse 236 besitzt über ihren Umfang verteilt mehrere Durchgangsöffnungen 240, die zueinander einen axialen Abstand aufweisen.

Die in Figur 10 gezeigte Ventilanordnung übt die gleiche Funktion aus wie die in Figur 8 dargestellte, so daß hier nur auf die Unterschiede eingegangen werden soll. Bei einem sich in dem Hohlraum 42 einstellenden Öldruck wird der Ventilkolben 60 wiederum gegen die Kraft der Feder 262 axial verschoben, so daß sich die freie Durchgangs fläche der Durchgangsöffnung 258 bzw. des Ringspalts 276 (Teilförderstromdrossel 130) verändert und damit eine Regelung des Förderstroms in der Durchgangsöffnung 222 erreicht wird. Der in der Durchgangsöffnung 222 sich einstellende Förderstrom wird gleichzeitig durch einen durch die Durchgangsöffnungen 240 (Teilförderstromdrossel 132) durchtretenden Teil-Förderstrom beeinflußt. Mit höherem Druck des Fluids und bei hohen Volumenströmen erhöhen sich die Strömungskraftanteile, so daß infolge eines sich einstellenden zusätzlichen Druckanteils im Hohlraum 242 gegenüber der Durchgangsöffnung 222 eine Druckdifferenz gegeben ist, die den Kolben 244 gegen die Kraft der Feder 246 axial verschiebt.

Durch die erläuterte Regelung des Förderstroms in der Durchgangsöffnung 222 und damit an einem an der Durchgangsöffnung 222 angeschlossenen Verbraucher, kann es zu einem Flattern des Ventilkolbens 244 kommen, was zu sprunghaften Änderungen in den Förderstromkennlinien führen würde. Der Hohlraum 322 bildet nunmehr einen Dämpfungsraum für den Ventilkolben 244, so daß das Flattern, das heißt das schnelle abwechselnde Auf- und Zufahren, der Meßblende 308 verhindert wird. Über die Durchgangsöffnung 263 steht der Hohlraum 322 mit dem Ringraum 230 in Verbindung, so daß dieser ebenfalls mit Fluid gefüllt ist. Erhöht sich nun infolge einer höheren Drehzahl der hydraulischen Fördereinrichtung der Volumenstrom, erhöhen sich die auf den Drosselkolben 244 wirkenden strömungskraftabhängigen Druckanteile. Diese zusätzlichen Druckanteile entstehen - wie bereits erwähnt - durch eine Druckdifferenz zwischen der Durchgangsöffnung 222 und dem Hohlraum 242 bzw. dem Ringraum 230. Neben dem Einfluß dieser Druckanteile auf eine Verstellung der Meßblende 308 durch axiale Verschiebung des Drosselkolbens 244 wirken diese ebenfalls in dem Hohlraum 322. Das Dämpfungsverhalten des Hohlraums 322 ist vom Durchmesser der Durchgangsöffnung (Dämpfungsdüse) 263 abhängig. Über die Wahl des Winkels α, mit der die Durchgangsöffnung 263 zu der Mittellinie 328 geneigt ist, kann der auf den Hohlraum 322 wirkende Anteil des Staudrucks bzw. der Strömungskraft beeinflußt werden. Je kleiner der Winkel α wird, um so mehr erhöht sich der Strömungskraftanteil für die Verstellung des Drosselkolbens 244. Wird der Winkel α hingegen größer gewählt, beispielsweise 90°, erhöht sich die Wirkung des Staudrucks für die Verstellung des Drosselkolbens 244. Durch die Ausgestaltung des Hohlraums 322 und insbesondere durch die Wahl der Anordnung der Durchgangsöffnung 263 kann der Hohlraum 322 als zusätzlicher Steuerraum für die Drosselwirkung des Drosselkolbens 244 genutzt werden. Je nach Einsatzverwendung der Ventilanordnung 210 kann entweder der Staudruckanteil oder der Strömungskraftanteil an der Verstellung des Drosselkolbens 244 erhöht werden.

Infolge der axialen Verschiebung des Kolbens 244 wird nach Überwindung eines einstellbaren Tothubes, der durch den axialen Abstand des Abschlusses 326 zu der am nächsten liegenden Durchgangsöffnung 240 eingestellt werden kann, in Abhängigkeit des anliegenden Druckes bzw. Druckanteile, wenigstens einer oder auch alle Durchgangsöffnungen 240 durch den Bereich 316 des Kolbens 244 überdeckt. Hierdurch erfolgt eine Regelung des durch die von den Durchgangsöffnungen 240 gebildeten zweiten Meßblende 310 durchtretenden Förderstromes auf ein gewünschtes Maß.

Insgesamt ist hier ebenfalls eine Kombination einer wegabhängigen Regelung durch die Meßblende 308 und einer strömungskraftabhängigen Regelung durch die Meßblende 310 realisiert. Es ist wiederum die Einstellung einer beliebigen Förderstromkennlinie bei hohen Pumpenströmen sowohl für niedrigere als auch höhere durch den hydraulischen Verbraucher bewirkte Systemdrücke möglich.

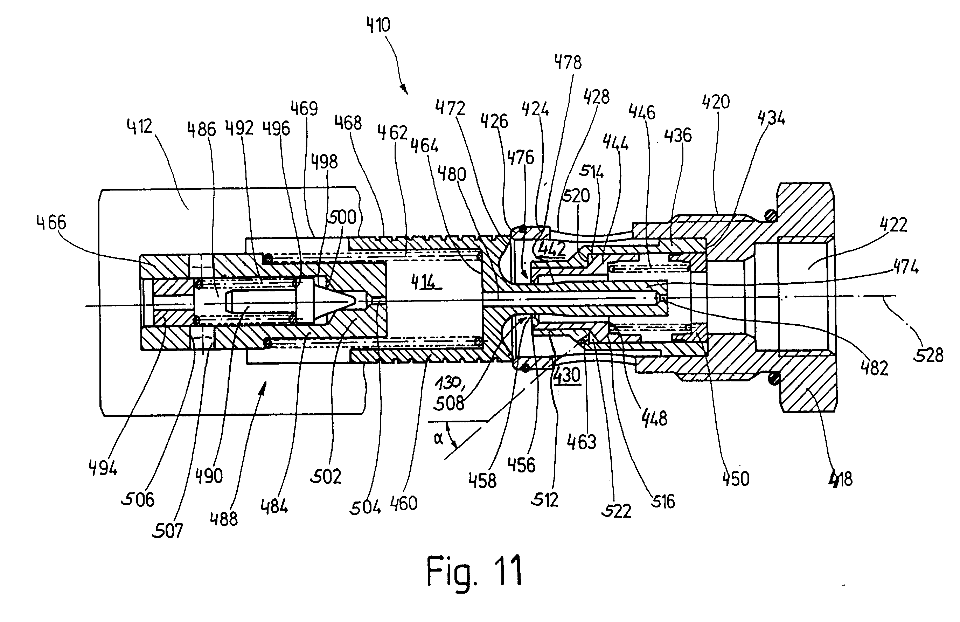

Figur 11 zeigt eine allgemein mit 410 bezeichnete Ventilanordnung, die in einem sich axial erstreckenden Innenraum 414 eines Ventilgehäuses 412 angeordnet ist. Auf die komplette Darstellung des Ventilgehäuses 412 wurde aus Gründen der Übersichtlichkeit verzichtet. An einer Stirnseite des Ventilgehäuses ist der Innenraum 414 durch einen Stopfen 418 verschlossen. Der Stopfen 418 ist auf geeignete Weise in den Innenraum 414 eingebracht, beispielsweise durch ein Gewinde 420. Der Stopfen 418 besitzt eine Durchgangsöffnung 422, an die ein nicht dargestellter Verbraucher, beispielsweise eine Lenkung eines Kraftfahrzeuges, angeschlossen ist. Der Stopfen 418 besitzt eine in den Innenraum 414 hineinragende axiale Verlängerung 424, die einen Endanschlag 426 ausbildet. Die Verlängerung 424 besitzt wenigstens eine Durchgangsbohrung 428, die in einem Ringraum 430 mündet. Die Durchgangsbohrung 428 verbindet den Ringraum 430 mit einem in der Verlängerung 424 ausgebildeten Hohlraum 442. Der Ringraum 430 steht mit einer nicht dargestellten Bohrung in Verbindung, die zu einer Druckseite einer nicht dargestellten hydraulischen Fördereinrichtung, beispielsweise einer Lenkhilfpumpe, führt. Die Verlängerung 424 bildet an ihrem Innenumfang eine Ringstufe 434 aus. In diese Ringstufe 434 ist eine Hülse 436 eingepaßt, die sich parallel zur Verlängerung 424 erstreckt. Innerhalb der Hülse 436 ist ein Drosselkolben 444 gegen die Kraft einer Feder 446 axial verschiebbar gelagert. Die Feder 446 stützt sich dabei an einer Stirnfläche 448 des Drosselkolbens 444 einerseits und an einer Federführung 450 andererseits ab. Der Drosselkolben 444 bildet eine Stirnfläche 456 aus, die eine Durchgangsöffnung 458 aufweist. Die Durchgangsöffnung 458 stellt eine Verbindung zwischen dem Hohlraum 442 und der Durchgangsöffnung 422 her.

Der Drosselkolben 444 besitzt einen durchmesserkleineren Bereich 512, der über eine Ringstufe 514 in einen durchmessergrößeren Bereich 516 übergeht. Die Ringstufe 514 bildet einen Anschlag aus, der gegen einen Endanschlag 520 der Hülse 436 führbar ist. Die Ringstufe 514 verläuft konisch, so daß sich zwischen der Ringstufe 514 und dem Endanschlag 520 ein Hohlraum 522 ergibt. Der Hohlraum 522 steht über wenigstens eine Durchgangsöffnung 463 mit dem Hohlraum 442 bzw. dem Ringraum 430 in Verbindung. Die Durchgangsöffnung 463 ist in einem frei wählbaren Winkel α zu einer Mittellinie 528 der Ventilanordnung 410 angeordnet und bildet eine Dämpfungsdüse. Die Durchgangsöffnung 463 besitzt einen möglichst kleinen Durchmesser, beispielsweise im Bereich von ca. 0,3 mm bis ca. 0,8 mm.

Innerhalb des Innenraums 414 des Ventilgehäuses 412 ist ein Ventilkolben 460 gegen die Kraft einer Feder 462 axial verschiebbar gelagert. Die Feder 462 stützt sich dabei an einem Grund 464 des Ventilkolbens 460 und einem Einsatz 466 ab. Der Ventilkolben 460 besitzt Dichtflächen 468, mit denen er an einer Wandung 469 des Innenraums 414 dichtend anliegt. Der Ventilkolben 460 weist einen ringförmigen Abschluß 472 auf, mit dem dieser durch die Kraft der Feder 462 gegen den Endanschlag 426 des Stopfens 418 gedrückt wird. Der Ventilkolben 460 besitzt weiterhin eine axiale Verlängerung 474, die die Durchgangsöffnung 458 des Drosselkolbens 444 durchgreift und in der Durchgangsöffnung 422 endet. Der Durchmesser der Verlängerung 474 ist dabei kleiner als der Durchmesser der Durchgangsöffnung 458, so daß sich ein Ringspalt 476 ergibt. Die Verlängerung 474 besitzt eine konische Erweiterung 478. Die Verlängerung 474 weist weiterhin eine axiale Bohrung 480 auf, die über eine durchmesserkleinere Blende 482 in der Durchgangsöffnung 422 mündet. Die Bohrung 480 endet andererseits in dem Innenraum 414.

Der Einsatz 466 schließt den Innenraum 414 an der dem Stopfen 418 abgewandten Seite ab und ist beispielsweise eingepreßt oder eingeschraubt. Der Einsatz 466 bildet eine Hülse 484 aus, die einen Innenraum 486 aufweist. In dem Innenraum 486 ist ein Druckbegrenzungsventil 488 angeordnet. Das Druckbegrenzungsventil 488 besitzt einen Schließkörper 490, der gegen die Kraft einer Feder 492 axial verschiebbar gelagert ist. Die Feder 492 stützt sich dabei an einem Stopfen 494 und einem Bund 496 des Schließkörpers 490 ab. Durch die Feder 492 wird eine konisch verlaufende Mantelfläche 498 des Schließkörpers 490 gegen eine Kante 500 eines Ventilsitzes 502 gedrückt. Der Ventilsitz 502 ist mit der Hülse 484 beispielsweise einstückig ausgebildet und dichtet den Innenraum 486 gegenüber dem Innenraum 414 ab und bildet einen Sitz für das Druckbegrenzungsventil 488. Der Ventilsitz 502 besitzt eine axiale Bohrung 504, die in den Innenraum 414 mündet. Von dem Innenraum 486 geht eine Bohrung 506 aus, die in einen Ringraum 507 mündet, der mit einer nicht dargestellten Bohrung in Verbindung steht, die beispielsweise zu einem Tank oder der Ansaugseite der hydraulischen Fördereinrichtung führt.

Die in der Figur 11 gezeigte Ventilanordnung 410 übt folgende Funktion aus:

Die allgemeine Funktionsweise der Ventilanordnung 410 ist an sich bekannt und dient dazu, einem Verbraucher einen vorgegebenen Förderstrom zuzuführen und diesen auf einen vorgebbaren Wert zu begrenzen. Diese Begrenzung soll auch dann gewährleistet sein, wenn durch die Radkräfte im Lenksystem zusätzlich zu einem hohen, auf hohen Drehzahlen der die hydraulische Fördereinrichtung antreibenden Brennkraftmaschine beruhenden Volumenstrom der erzeugte Systemdruck ansteigt. Dies kann beispielsweise bei einer schnellen Autobahnfahrt der Fall sein, bei der die hydraulische Fördereinrichtung eine hohe Drehzahl aufweist und damit ein hohes Fördervolumen zur Verfügung stellt.

Ein von der nicht dargestellten hydraulischen Fördereinrichtung ausgehender Öldruck wirkt über den Ringraum 430, die Durchgangsbohrung 428 und den Hohlraum 442 auf den Ventilkolben 460. Über den Ringspalt 476 stellt sich gleichzeitig ein bestimmter Förderstrom in der Durchgangsöffnung 422 und damit an einem dort angeschlossenen Verbraucher ein. Dieser Förderstrom wird im wesentlichen durch die freie Durchgangs fläche der Durchgangsöffnung 458, bzw. der Fläche des Ringspalts 476, bestimmt. Der als Ringfläche ausgebildete Spalt 476 stellt somit eine Meßblende 508 dar.

In dem Maße, wie der Volumenstrom und ein vom Volumenstrom bewirkter Differenzdruck über die Meßblende 508 ansteigt, wird der Ventilkolben 460 gegen die Kraft der Feder 462 in den Innenraum 414 hineingedrückt. Durch diese axiale Verschiebung des Ventilkolbens 460 wird gleichzeitig die Verlängerung 474 in die Durchgangsöffnung 458 gezogen. Die konische Erweiterung 478 bewirkt dabei eine Verkleinerung der freien Durchgangsfläche der Durchgangsöffnung 458, so daß der Ringspalt 476 sich proportional verkleinert. Hiermit wird erreicht, daß trotz eines erhöhten Volumenstroms ein reduzierter Förderstrom über die Durchgangsöffnung 422 den angeschlossenen Verbraucher erreicht.

Steigt der Systemdruck bei hohen Volumenströmen, das heißt, bei hoher Drehzahl auf hohe Werte an, entstehen zusätzliche Druckerhöhungen durch Strömungskraftanteile. Diese zusätzlichen Druckerhöhungen herrschen ebenfalls - wie bereits erwähnt - in dem Hohlraum 442. Dort drücken diese zusätzlichen Druckanteile einerseits auf den Ventilkolben 460 und andererseits auf die Stirnfläche 456 und über die Durchgangsöffnung 463 im Hohlraum 522 auf die Fläche der Ringstufe 514 des Drosselkolbens 444. Übersteigen diese Druckanteile einen bestimmten wählbaren Wert, wird der Drossel kolben 444 gegen die Kraft der Feder 446 axial verschoben. Hierdurch erfolgt einerseits eine relative Bewegung der Stirnfläche 456 zu der konischen Erweiterung 478 der Verlängerung 474, die durch die axiale Verschiebung des Ventilkolbens 460 in entgegengesetzter Richtung unterstützt wird, so daß sich hier schneller eine kleinere freie Durchgangsfläche der Durchgangsöffnung 458 und damit des Ringspalts 476 einstellt. Es erfolgt somit bei Zunahme der Strömungskraft eine Addition des Kolbenhubs des Ventilkolbens 460 und des Kolbenhubs des Drosselkolbens 444. Der freie Querschnitt des Ringspalts 476 wird stärker bzw. früher zugefahren. Es kommt somit zu einer doppelhubig verstellbaren Meßblende 508. Durch die Kombination der zwei unabhängig voneinander wirkenden Kolben 460 bzw. 444 wird erreicht, daß bei unterschiedlich hohen Systemdrücken eine entsprechend angepaßte Herunterregelung des Förderstroms in der Durchgangsöffnung 422 erfolgen kann. Es sind Förderstromkennlinien einstellbar, die auch bei hohen Systemdrücken und hohen Volumenströmen eine Absenkung des Förderstroms auf die gewünschten Werte, beispielsweise unterhalb 8 Liter pro Minute, gewährleistet.

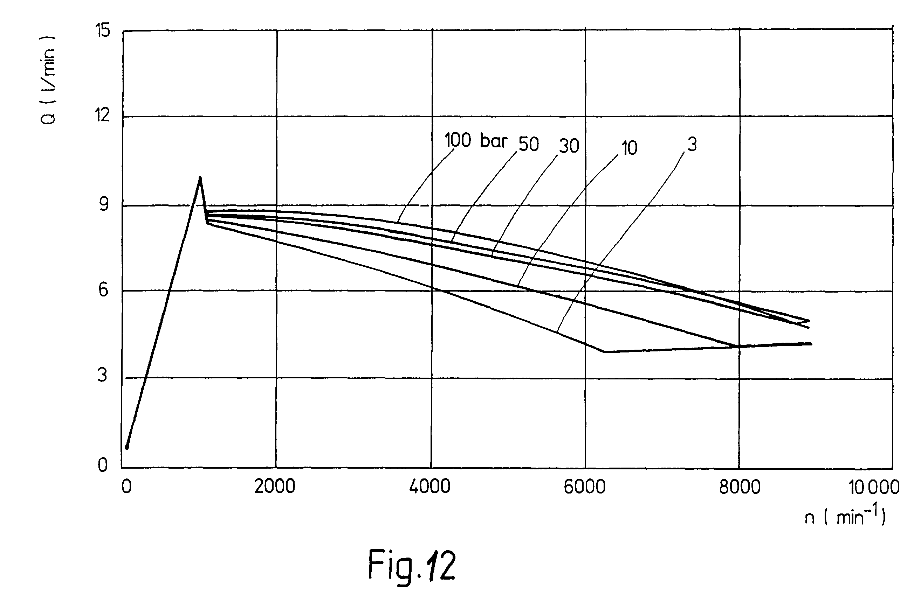

In der Figur 12 sind Förderstromkennlinien der in Figur 11 gezeigten Ventilanordnung 410 in einem Beispiel gezeigt. Es ist die Abhängigkeit des Förderstroms Q von der Drehzahl n der nicht dargestellten hydraulischen Fördereinrichung, beispielsweise einer Flügelzellenpumpe und dem Systemdruck dargestellt. Es wird deutlich, daß trotz sehr hoch steigender Drehzahl n und gleichzeitig ansteigendem Systemdruck, beispielsweise auf 100 bar, gemäß der oberen eingezeichneten Förderstromkennlinie, eine Absenkung des Förderstroms Q bzw. deren annähernde Konstanthaltung auf Werte unterhalb von 8 Litern pro Minute möglich ist. Eine Absenkung der Förderstromkennlinien für unterschiedliche Systemdrücke erfolgt etwa gleichmäßig, das heißt, die Förderstromkennlinien verlaufen im Bereich hoher Drehzahlen annähernd parallel zueinander in einem Wertebereich von ca. 5 bis 8 Litern pro Minute.

Durch Ausgestaltung des Ventilkolbens 460 und des Kolbens 444, insbesondere deren mit dem Öldruck und den zusätzlichen Druckanteilen beaufschlagten Stirnflächen sowie Einstellung der von den Federn 462 bzw. 446 ausgehenden Federkraft, können die Förderstromkennlinien für niedrige und hohe Systemdrücke unabhängig voneinander eingestellt werden. Über den Ventilkolben 460 erfolgt eine wegabhängige Regelung durch die wegabhängige Verstellung der Meßblende 508. Mit dem Drossel kolben 444 kann eine strömungskraftabhängige Regelung der Förderstromkennlinie, insbesondere für hohe Systemdrücke, erfolgen. Diese Strömungskraft wirkt auf die Stirnfläche 456 und die Fläche der Ringstufe 514 des Drosselkolbens 444, in dem sich bei hohen Drücken zwischen dem Hohlraum 442 und der Durchgangsöffnung 422 eine Druckdifferenz einstellt, die der Strömungskraft des Fluids und der Federkraft der Feder 462 des Ventilkolbens 460 entspricht. Diese Strömungskraft wirkt auf den Drosselkolben 444 und drückt diesen gegen die Feder 446.

Durch die erläuterte Regelung des Förderstroms in der Durchgangsöffnung 422 und damit an einem an der Durchgangsöffnung 422 angeschlossenen Verbraucher, kann es zu einem Flattern des Drosselkolbens 444 kommen, was zu sprunghaften Änderungen in den Förderstromkennlinien führen würde. Der Hohlraum 522 bildet nunmehr einen Dämpfungsraum für den Drossel kolben 444, so daß das Flattern, das heißt das schnelle abwechselnde Auf- und Zufahren, der Meßblende 508 verhindert wird. Über die Durchgangsöffnung 463 steht der Hohlraum 522 mit dem Ringraum 430 in Verbindung, so daß dieser ebenfalls mit Fluid gefüllt ist. Erhöht sich nun infolge einer höheren Drehzahl der hydraulischen Fördereinrichtung der Volumenstrom, erhöhen sich die auf den Drosselkolben 444 wirkenden strömungskraftabhängigen Druckanteile. Diese zusätzlichen Druckanteile entstehen - wie bereits erwähnt - durch eine Druckdifferenz zwischen der Durchgangsöffnung 422 und dem Hohlraum 442 bzw. dem Ringraum 430. Neben dem Einfluß dieser Druckanteile auf eine Verstellung der Meßblende 508 durch axiale Verschiebung des Drosselkolbens 444 wirken diese ebenfalls in dem Hohlraum 522. Das Dämpfungsverhalten des Hohlraums 522 ist vom Durchmesser der Durchgangsöffnung (Dämpfungsdüse) 463 abhängig. Über die Wahl des Winkels α, mit der die Durchgangsöffnung 463 zu der Mittellinie 528 geneigt ist, kann der auf den Hohlraum 522 wirkende Anteil des Staudrucks bzw. der Strömungskraft beeinflußt werden. Je kleiner der Winkel α wird, um so mehr erhöht sich der Strömungskraftanteil für die Verstellung des Drosselkolbens 444. Wird der Winkel α hingegen größer gewählt, beispielsweise 90°, erhöht sich die Wirkung des Staudrucks für die Verstellung des Drosselkolbens 444. Durch die Ausgestaltung des Hohlraums 522 und insbesondere durch die Wahl der Anordnung der Durchgangsöffnung 463 kann der Hohlraum 522 als zusätzlicher Steuerraum für die Drosselwirkung des Drosselkolbens 444 genutzt werden. Je nach Einsatzverwendung der Ventilanordnung 410 kann entweder der Staudruckanteil oder der Strömungskraftanteil an der Verstellung des Drosselkolbens 444 erhöht werden.

Während des axialen Verschiebens des Drosselkolbens 644 entfernt sich die Ringstufe 714 des Drosselkolbens 644 von dem Endanschlag 720 der Hülse 636, so daß der Hohlraum 722 sein Volumen vergrößert. Durch die Durchgangsöffnung 663 muß nunmehr das Fluid in den vergrößerten Hohlraum 722 nachströmen und auf den Drosselkolben 744 wirken. Sinkt der Systemdruck wieder ab, verkleinert sich die Druckdifferenz zwischen dem Ringraum 630 bzw. dem Innenraum 642 und der Durchgangsöffnung 622, so daß der Drosselkolben durch die Kraft der Feder 646 axial in Richtung des Ventilkolbens 660 verschoben wird. Das sich in dem Hohlraum 722 befindende Fluid wird durch die Durchgangsöffnung 663 wieder zurück in den Ringraum 630 bzw. den Innenraum 642 gedrückt. Die Durchgangsöffnung 663 bildet dabei eine definierte Verengung aus, so daß das Ein- und Ausströmen in den Hohlraum 722 Druckdifferenzen an der Ringstufe 714 bewirkt und damit der Flatter-/Schwingungsbewegung des Drosselkolbens 644 entgegenwirkende Bremskräfte (Dämpfung) erzeugt werden und somit ein elastisches Dämpfungsverhalten auf den Drosselkolben 644 ausgeübt wird. Ein schnelles, abwechselndes Auf- und Zufahren der Meßblende 708 durch den Drosselkolben 644 wird somit vermindert.

Der in der Durchgangsöffnung 422 herrschende Druck liegt über die Bohrung 480 der Verlängerung 474 gleichzeitig in dem Innenraum 414 und damit am Druckbegrenzungsventil 488 an. Durch die Ausbildung der Blende 482 wird der auf das Druckbegrenzungsventil 488 und im Innenraum 414 wirkende Druck gegenüber dem Druck im Hohlraum 442 bei Durchfluß durch die Blende 482 reduziert. Wird ein bestimmter maximaler Druck überschritten, wird über die Bohrung 504 der Öldruck auf den Schließkörper 490 so groß, daß dieser gegen die Kraft der Feder 492 axial verschoben wird. Hierdurch ergibt sich, daß das unter Druck stehende Fluid durch die Bohrung 504, den Innenraum 486 und die Bohrung 506 beispielsweise zu der Ansaugseite bzw. einem Tank der nicht dargestellten hydraulischen Fördereinrichtung zurückfließen kann. Der Druck wird damit auf seinen maximalen Wert begrenzt und steigt nicht weiter an.

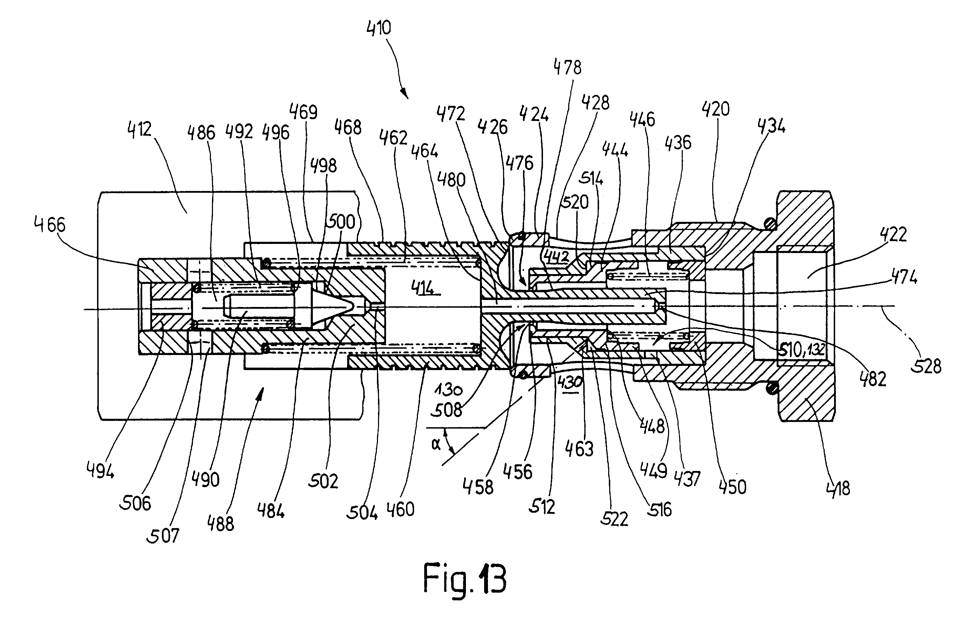

Figur 13 zeigt eine Ventilanordnung 410 in einem anderen Ausführungsbeispiel. Gleiche Teile wie in Figur 11 sind mit gleichen Bezugszeichen versehen und hier nicht nochmals erläutert.

In dem in Figur 13 dargestellten Ausführungsbeispiel weist die Hülse 436 wenigstens eine Durchgangsöffnung 437 auf, die die Durchgangsöffnung 422 mit dem Hohlraum 442 verbindet. Die Durchgangsöffnung 437 besitzt dabei einen axialen Abstand zu einem Ringfortsatz 449 des Drosselkolbens 444. Hierdurch wird erreicht, daß sich zusätzlich zu dem durch die Meßblende 508 einstellenden Förderstrom ein weiterer Förderstrom durch die Durchgangsöffnung 437 einstellt, so daß sich in der Durchgangsöffnung 422 ein aus den Teil-Förderströmen zusammensetzender Gesamt-Förderstrom ergibt. Die Durchgangsöffnung 437 stellt somit eine zweite Meßblende 510 (Teilförderstromdrossel 132) dar, die zu der Meßblende 508 parallel angeordnet ist. Durch diese zusätzliche Durchgangsöffnung 437 kann eine unabhängig von der Drossel funktion der Meßblende 508 wirkende Drossel funktion (Teilförderstromdrossel 130) realisiert werden. Dies ergibt sich dadurch, daß mit den zusätzlichen Druckanteilen in dem Hohlraum 442 und der sich einstellenden Druckdifferenz zwischen dem Hohlraum 442 und der Durchgangsöffnung 422 der Drosselkolben 444 gegen die Kraft der Feder 446 axial verschoben wird und nach Zurücklegen einer bestimmten, frei wählbaren Weglänge die Durchgangsöffnung 437 zumindest teilweise verschließt. Durch den axialen Abstand des Ringfortsatzes 449 des Drosselkolbens 444 und der Durchgangsöffnung 437 kann ein eigener Tothub, das heißt ein bestimmter Druckanstieg bis zum Wirksamwerden der zweiten Meßblende 510 eingestellt werden.

Durch Variation des Querschnitts der Durchgangs-öffnung 437 bzw. durch Anordnung mehrerer, gegebenenfalls axial zueinander beabstandeter Durchgangsöffnungen 437 in der Hülse 436 kann über die Wahl der in Abhängigkeit der erwähnten zusätzlichen Druckanteile zu verschließenden Querschnittsfläche der Durchgangsöffnungen 437 jede beliebige Förderstromkennlinie eingestellt werden. Es findet somit außer der kombinierten weg- und strömungskraftabhängigen Regelung über die Meßblende 508 eine zusätzliche strömungskraftabhängige Regelung der Förderstromkennlinie über die Meßblende 510 statt. Wesentlich ist dabei, daß die Meßblende 508 zusätzlich zu der axialen Verlängerung 474 eine Bewegung durchführen kann und so mit dieser zusammenwirkt und eine doppelhubig verstellbare Meßblende 508 bildet.

Durch die kombinierte Regelung des Förderstroms über die Meßblenden 508 und 510 ist es möglich, mehrere Parameter zur Einstellung einer bestimmten wählbaren Förderstromkennlinie heranzuziehen. Diese sind insbesondere die Einstellung der Federkräfte der Federn 462 bzw. 446 als Öffnungskräfte, die Öffnungshübe des Ventilkolbens 460 bzw. des Drosselkolbens 444 und die Größe der Durchgangsöffnung 463, welche einzeln einstellbar sind. Weiterhin kann der Querschnitt der Meßblenden 508 und 510 durch Wahl der Durchgangsöffnung 458 bzw. 437 sowie Wahl der Konizität der Erweiterung 478 ebenfalls einzeln festgelegt werden. Dies ist durch eine zusätzliche Ausnutzung der sich insbesondere bei hohen Volumenströmen durch Systemdruckunterschiede ergebenden Strömungskräfte auf den Drosselkolben 444 möglich.

Die erwähnte kombinierte Regelung des Förderstroms kann ebenfalls mit einem Dämpfungsverhalten über den hier ebenfalls ausgebildeten Hohlraum 522 kombiniert werden. Die Dämpfungswirkung des Hohlraums 522 ergibt sich aus dem bereits zu Figur 11 dargelegten Verhalten des Hohlraums 522.

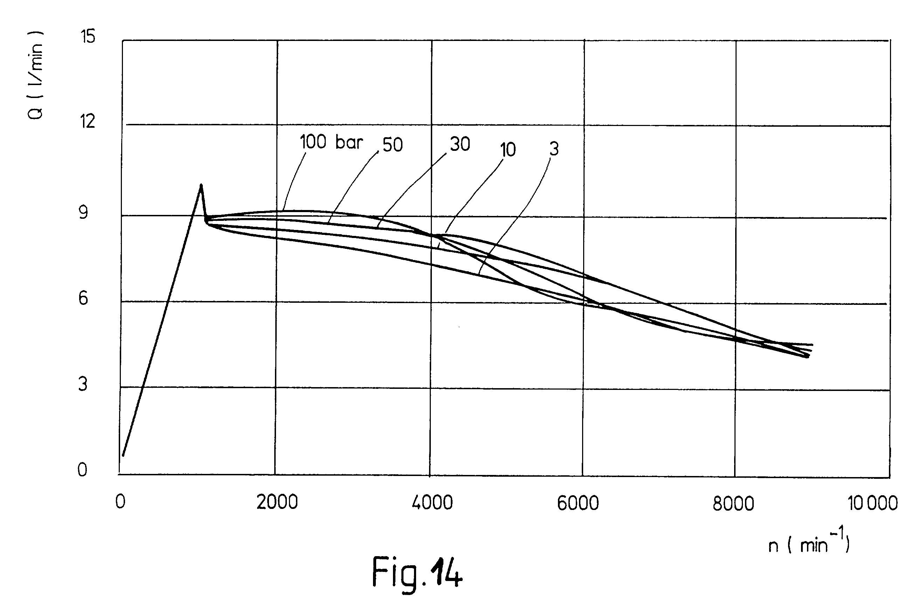

In der Figur 14 sind beispielhaft Förderstromkennlinien der in Figur 13 gezeigten Ventilanordnung 410 dargestellt. Es wird deutlich, daß sich der Streubereich der Förderstromkennlinien bei hohen Drehzahlen n der hydraulischen Fördereinrichtung und unterschiedlichen Systemdrücken zwischen 3 und 100 bar in einem extrem schmalen Band befinden. So sind Förderstromkennlinien erreichbar, die bei gleicher Drehzahl und unterschiedlich hohen Systemdrücken in ihrem Volumenstrom Q nicht mehr als ca. 1 Liter pro Minute voneinander abweichen. Insbesondere bei den Förderstromkennlinien für die hohen Drücke wird deutlich, daß mit zunehmender Drehzahl n und damit ansteigendem Staudruck eine stärkere Absenkung des Förderstromvolumens möglich ist.

## Patentansprüche

1. Ventilanordnung mit einem Stromregelventil, das einen gegen die Kraft einer Feder in einem axialen Innenraum verschiebbar geführten Ventilkolben und eine einen Förderstrom zu einem hydraulischen Verbraucher beeinflussende Förderstromdrossel aufweist, **dadurch gekennzeichnet**, daß die Förderstromdrossel von unabhängig voneinander wirkenden Teilförderstromdrosseln (130, 132) gebildet wird, die jeweils eine veränderbare Meßblende (308, 508, 126, 310, 128, 510) aufweisen und die beide zusammen den Förderstrom zu dem hydraulischen Verbraucher beeinflussen.

2. Ventilanordnung nach Anspruch 1, **dadurch gekennzeichnet**, daß die Meßblende (126, 308, 508) der ersten Teilförderstromdrossel (130) wegabhängig und die Meßblende (128, 310, 510) der zweiten Teilförderstromdrossel (132) staudruckabhängig verstellbar ist.

3. Ventilanordnung nach einem der vorhergehenden Ansprüche, **dadurch gekennzeichnet**, daß die zweite Teilförderstromdrossel (132) mit einer von einer Zunahme des Förderstroms (Volumenstrom) abhängigen Druckdifferenz zwischen einem Arbeitsdruck (p1) der hydraulischen Fördereinrichtung und einem sich auf den Ventilkolben (86) einstellenden Druck (p2) beaufschlagbar ist.

4. Ventilanordnung nach einem der vorhergehenden Ansprüche, **dadurch gekennzeichnet**, daß die erste Teilförderstromdrossel (130) von einer axialen Verlängerung (74, 274, 474) des Ventilkolbens (60, 260, 460) gebildet ist, die eine Durchgangsöffnung (58, 258, 458) einer feststehenden Hülse (36, Stirnwand (56, 256, 456)) durchgreift.

5. Ventilanordnung nach einem der vorhergehenden Ansprüche, **dadurch gekennzeichnet**, daß die Stirnwand (456) zur Ausbildung einer durch die Meßblendenbohrung (458) und die Verlängerung (474) gebildeten, doppelhubig verstellbaren Förderstromdrossel unabhängig von einer Bewegung der Verlängerung (474) zusätzlich bewegbar ist.

6. Ventilanordnung nach einem der vorhergehenden Ansprüche, **dadurch gekennzeichnet**, daß die Meßblende (308, 508) von einem gegen die Kraft einer Feder (246, 446) axial verschiebbar geführten Drosselkolben (244, 444) und einer konischen Erweiterung (278, 478) der Verlängerung (274, 474) gebildet wird.

7. Ventilanordnung nach einem der vorhergehenden Ansprüche, **dadurch gekennzeichnet**, daß die zweite Meßblende (310, 510) von dem axial gegen die Kraft der Feder (246, 446) verschiebbar geführten Kolben (244, 444) verstellbar ist.

8. Ventilanordnung nach einem der vorhergehenden Ansprüche, **dadurch gekennzeichnet**, daß die zweite Meßblende (310, 510) von wenigstens einer Durchgangsöffnung (240, 437) eines Stopfens (218, 418) bzw. einer Hülse (236, 436) gebildet wird, die von einer Umfangsfläche des Kolbens (244, 444) übergreifbar ist.

9. Ventilanordnung nach einem der vorhergehenden Ansprüche, **dadurch gekennzeichnet**, daß der Drosselkolben (244, 444) einen Dämpfungsraum (322, 522) ausbildet, der über wenigstens eine Durchgangsöffnung (263, 463) mit einem mit einer Druckseite einer hydraulischen Fördereinrichtung verbundenen Druckraum (230, 242, 430, 442) der Ventilanordnung (210, 410) in Verbindung steht.

10. Ventilanordnung nach einem der vorhergehenden Ansprüche, **dadurch gekennzeichnet**, daß die Durchgangsöffnung (263, 463) in einem frei wählbaren Winkel (α) in bezug auf eine Mittellinie (328, 528) der Ventilanordnung (210, 410) angeordnet ist.

11. Ventilanordnung nach einem der vorhergehenden Ansprüche, **dadurch gekennzeichnet**, daß über die Wahl des Winkels (α) die Wirkung eines Staudruck- und/oder Strömungskraftanteils eines Volumenstromes der hydraulischen Fördereinrichtung auf die Verstellung des Drosselkolbens (244, 444) einstellbar ist.

## Claims

1. A valve arrangement having a flow control valve which includes a valve piston displaceably guided in an axial inner space against the force of a spring, and a delivery-flow throttle which influences a delivery flow to a hydraulic consumer, characterized in that the delivery-flow throttle is formed by partial delivery-flow throttles (130, 132) which act independently of one another, each include a variable metering orifice (308, 508, 126, 310, 128, 510) and both together influence the delivery flow to the hydraulic consumer.

2. A valve arrangement according to Claim 1, characterized in that the metering orifice (126, 308, 508) of the first partial delivery-flow throttle (130) is adjustable in dependence on path and the metering orifice (128, 310, 510) of the second partial delivery-flow throttle (132) is adjustable in dependence on dynamic pressure.

3. A valve arrangement according to one of the preceding claims, characterized in that the second partial delivery-flow throttle (132) can be subjected to a pressure difference, dependent on an increase of the delivery flow (volumetric flow), between a working pressure (p1) of the hydraulic delivery apparatus and a pressure (p2) acting on the valve piston (86).

4. A valve arrangement according to one of the preceding claims, characterized in that the first partial delivery-flow throttle (130) is formed by an axial extension (74, 274, 474) of the valve piston (60, 260, 460), which axial extension reaches through a through-opening (58, 258, 458) of a stationary sleeve (36, end wall (56, 256, 456)).

5. A valve arrangement according to one of the preceding claims, characterized in that the end wall (456) is additionally movable, independently of a movement of the extension (474), for the formation of a delivery-flow throttle formed by the metering-orifice bore (458) and the extension (474) and having a double-stroke adjustment capability.

6. A valve arrangement according to one of the preceding claims, characterized in that the metering orifice (308, 508) is formed by a throttling piston (244, 444) guided axially displaceably against the force of a spring (246, 446), and a conical enlargement (278, 478) of the extension (274, 474).

7. A valve arrangement according to one of the preceding claims, characterized in that the second metering orifice (310, 510) is adjustable by the piston (244, 444) guided axially displaceably against the force of the spring (246, 446).

8. A valve arrangement according to one of the preceding claims, characterized in that the second metering orifice (310, 510) is formed by at least one through-opening (240, 437) of a plug (218, 418) or of a sleeve (236, 436), which through-opening can be overlapped by a peripheral surface of the piston (244, 444).

9. A valve arrangement according to one of the preceding claims, characterized in that the throttling piston (244, 444) forms a damping space (322, 522) which is in communication, via at least one through-opening (263, 463), with a pressure space (230, 242, 430, 442) of the valve arrangement (210, 410), which pressure space is connected to a pressure side of a hydraulic delivery apparatus.

10. A valve arrangement according to one of the preceding claims, characterized in that the through-opening (263, 463) is arranged at a freely selectable angle (α) in relation to a centre line (328, 528) of the valve arrangement (210, 410).

11. A valve arrangement according to one of the preceding claims, characterized in that the selection of the angle (α) makes it possible to vary the action of a dynamic-pressure and/or flow-force component of a volumetric flow of the hydraulic delivery apparatus on the adjustment of the throttling piston (244, 444).

## Revendications

1. Agencement de soupape comprenant une soupape de régulation du débit qui présente un piston de soupape guidé dans un espace interne axial contre la force d'un ressort et un étranglement de débit influençant un débit alimentant un consommateur hydraulique, caractérisé en ce que l'étranglement de débit est formé par des étranglements de débit partiels (130. 132) agissant indépendamment l'un de l'autre, qui comportent chacun un diaphragme de mesure variable (308, 508, 126, 310, 128, 510) et qui influent ensemble sur le débit alimentant un consommateur hydraulique.

2. Agencement de soupape selon la revendication 1, caractérisé en ce que le diaphragme de mesure (126, 308, 508) du premier étranglement de débit partiel (130) est réglable en fonction de la course, et le diaphragme de mesure (128. 310, 510) du second étranglement de débit partiel (132) est réglable en fonction de la pression d'arrêt.

3. Agencement de soupape selon l'une des revendications précédentes, caractérisé en ce que le second étranglement de débit partiel (132) peut être sollicité par une différence de pression dépendant d'une augmentation du débit (volume déplacé) entre la pression de travail (p1) du dispositif de refoulement hydraulique et une pression (p2) agissant sur le piston de soupape (86).

4. Agencement de soupape selon l'une des revendications précédentes, caractérisé en ce que le premier étranglement de débit partiel (130) est formé par un prolongement axial (74, 274, 474) du piston de soupape (60, 260, 460) qui traverse une ouverture de passage (58, 258, 458) d'une douille fixe (36, paroi frontale (56, 256, 456)).

5. Agencement de soupape selon l'une des revendications précédentes, caracténsé en ce que la paroi frontale (456) destinée à réaliser un étranglement de débit réglable en va-et-vient et formé par le perçage de diaphragme de mesure (458) et par le prolongement (474) est en plus mobile indépendamment d'un mouvement du prolongement (474).

6. Agencement de soupape selon l'une des revendications précédentes, caractérisé en ce que le diaphragme de mesure (308, 508) est formé par un piston d'étranglement (244, 444) guidé de façon à être mobile axialement contre la force d'un ressort (246, 446) et par un élargissement conique (278, 478) du prolongement (274, 474).

7. Agencement de soupape selon l'une des revendications précédentes, caractérisé en ce que le second diaphragme de mesure (310, 510) est réglable au moyen du piston (244, 444) guidé de façon à être mobile axialement contre la force du ressort (246, 446).

8. Agencement de soupape selon l'une des revendications précédentes, caractérisé en ce que le second diaphragme de mesure (310, 510) est formé par au moins un orifice de passage (240, 437) d'un bouchon (218, 418) ou d'une douille (236, 436), qui peut être recouvert par une surface périphérique du piston (244, 444).

9. Agencement de soupape selon l'une des revendications précédentes, caractérisé en ce que le piston d'étranglement (244, 444) forme un espace d'amortissement (322, 522) qui communique par au moins un orifice de passage (263, 463) avec un espace de pression (230, 242, 430, 442) de l'agencement de soupape (210, 410) communiquant quant à lui avec le côté de pression d'un dispositif de refoulement hydraulique.

10. Agencement de soupape selon l'une des revendications précédentes, caractérisé en ce que l'orifice de passage (263, 463) forme par rapport à une médiane (328, 528) de l'agencement de soupape (210, 410) un angle (α) pouvant être choisi librement.

11. Agencement de soupape selon l'une des revendications précédentes, caractérisé en ce que le choix de l'angle (α) permet de régler l'action de la pression d'arrêt et/ou de la puissance d'écoulement d'un volume déplacé du dispositif de refoulement hydraulique sur le déplacement du piston d'étranglement (244, 444).
